# EUROPÄISCHE PATENTANMELDUNG

(11) **EP 2 535 132 A1**
(43) Veröffentlichungstag der Anmeldung: **19.12.2012**
(21) Anmeldenummer: 10845768.0
(22) Anmeldetag: 24.06.2010
(51) Int. Cl.: B23D 36/00, B23D 33/02, B23D 47/04

(54) **RUNDSÄGE UND -SCHNEIDEMASCHINE**

(30) Priorität: 10.02.2010 JP 2010027607
(71) Anmelder: Nishijima Kabushikikaisha, Toyohashi-shi, Aichi 441-1102 (JP)
(72) Erfinder: ONO Mitsuo, Toyohashi-shi Aichi 441-1102 (JP)
(74) Vertreter: Grüneberg, Marcus
(86) Internationale Anmeldenummer: PCT/JP2010/060768
(87) Internationale Veröffentlichungsnummer: WO 2011/099176

(57) **Zusammenfassung**

Ziel ist die Verringerung der Restmaterialmenge in einer Sägemaschine mit Kreissägeblatt, durch Ausführen zusätzlicher Sägeschnitte auch dann, wenn ein Zuführen nicht mehr möglich ist, unter Aufrechterhaltung der Bearbeitungsgenauigkeit.

Eine Hauptspanneinheit 13 umfasst eine stationäre hintere Spanneinheit 30 und eine vordere Spanneinheit 40, die derart ausgelegt ist, dass sie in einem Bereich zwischen einer Position P3 vor einer vorgegebenen Schnittposition P2 und einer hintersten Position P1, in der die hinteren Enden der Backen 41 und 42 in Kontakt mit den vorderen Enden der Backen 31 und 32 der hinteren Spanneinheit 30 gelangen, bewegt werden kann. Die hintere und vordere Spanneinheit 30 und 40 umfassen die Spannzylinder 33 und 43, die unabhängig voneinander gesteuert werden können, so dass sie die zugehörigen Spannzeuge unabhängig voneinander spannen und entspannen können. Wenn photoelektrische Sensoren 56 das hintere Ende des Werkstücks W erkennen, wird die verbleibende Länge L berechnet, die dann durch den Zuführbetrag Ader festen Länge dividiert wird, um die verbleibende Anzahl N der möglichen Sägeoperationen zu ermitteln. Die verbleibende Anzahl N der Operationen mit Zuführung fester Länge wird abgearbeitet, indem das Werkstück entweder durch die vordere Spanneinheit 40 und die Zuführspanneinheit 15 in Kombination oder durch die vordere Spanneinheit 40 allein ziehend weiter zugeführt wird.

## Beschreibung

Die Erfindung betrifft ein Verfahren zur Verringerung des Materialrests beim Sägen auf feste Länge mittels einer Sägemaschine mit Kreissägeblatt.

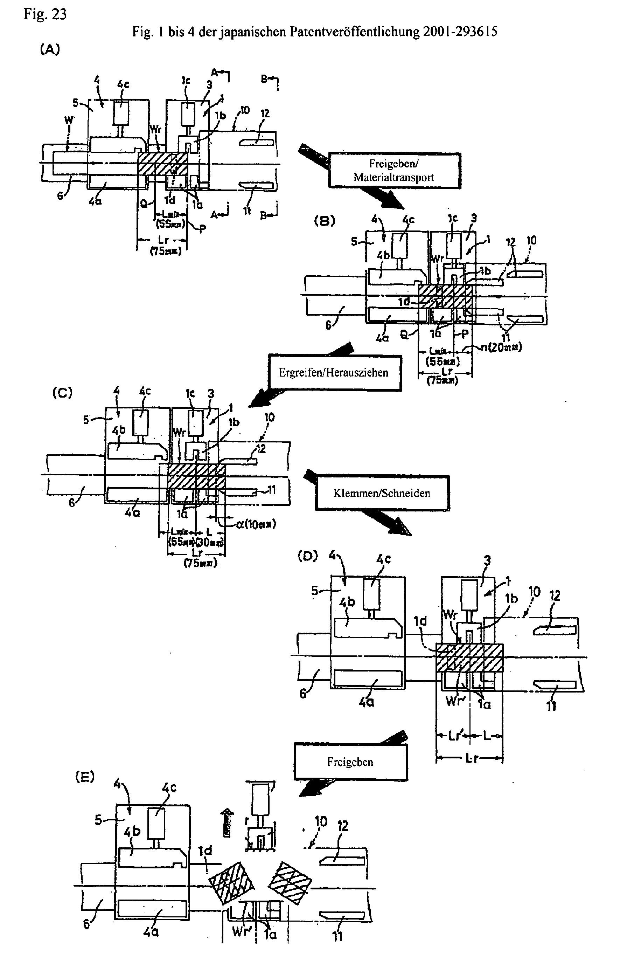

Wie in Fig. 23 gezeigt, umfasst eine Sägemaschine üblicherweise einen Hauptspannmechanismus 1 zum Festhalten des zu bearbeitenden Werkstücks W vor und hinter einer Schnittposition P sowie einen Werkstückzuführspannmechanismus 4 zum Festhalten des Werkstücks W und Zuführen des Werkstücks W in die Schnittposition P und sägt dann das Werkstück W in aufeinanderfolgenden Schnitten, sobald es der Werkstückzuführspannmechanismus 4 jeweils um eine zuvor festgelegte Absägelänge L vorbewegt hat. Es ist vorgeschlagen worden, in dieser Sägemaschine mit Kreissägeblatt einen Werkstückrückzugmechanismus 10 zum Ergreifen des oberen Werkstoffreststücks Wr vorzusehen, um das Werkstoffreststück Wr in der Werkstückzuführrichtung um eine gegebene Länge α=L-(Lr-Lmin) zurückzuziehen, wenn die Differenz zwischen der Länge Lr des Werkstoffreststücks Wr und der seitens des Werkstückzuführspannmechanismus 4 vorgegebenen Zuführgrenzlänge Lmin des Werkstoffreststücks Wr kleiner wird als die Absägelänge L des Werkstücks W (d.h. L>Lr-Lmin) (Patentdokument 1).

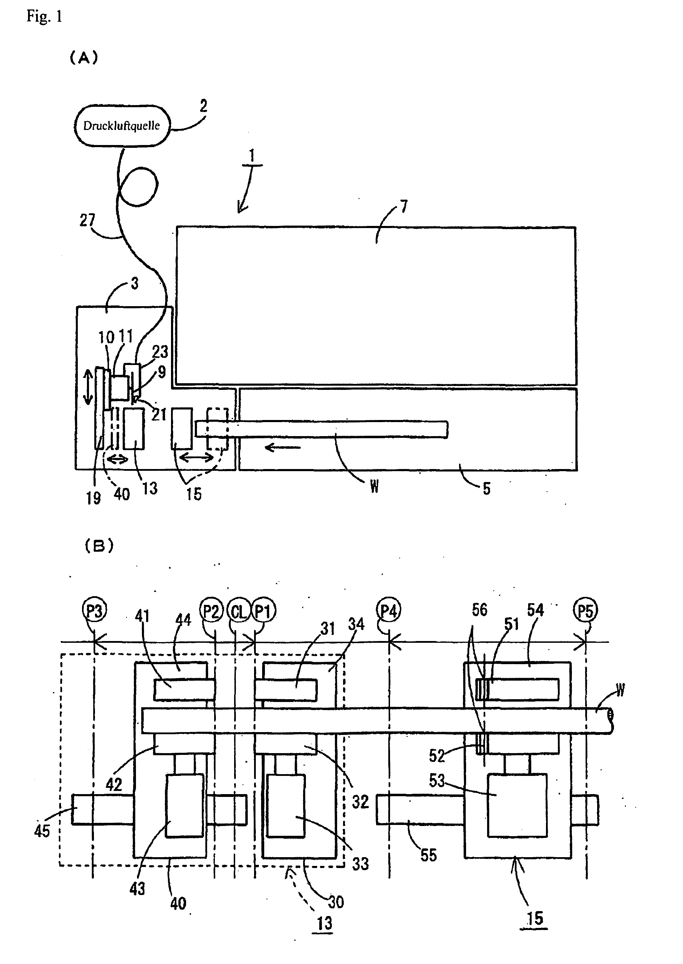

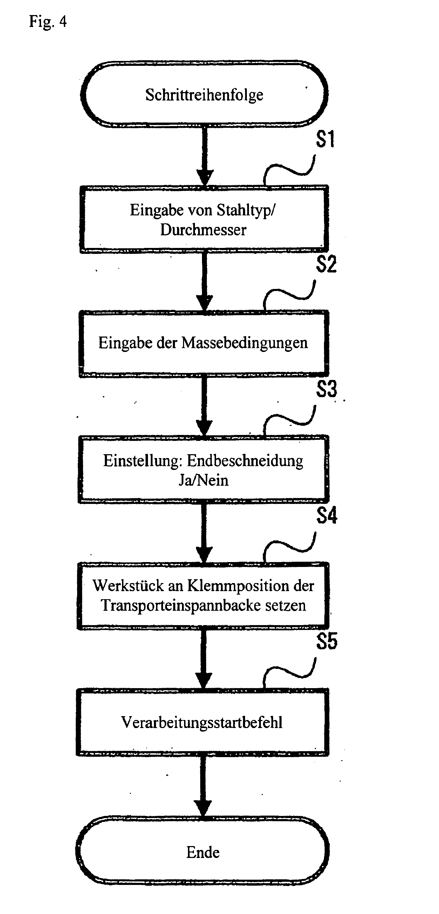

[Patentdokument 1] Ungeprüfte, veröffentlichte japanische Patentanmeldung 2001-293615 (Zusammenfassung und Figuren 1 bis 4).

Gemäß der Apparatur von Patentdokument 1 kann nach der Ausführung des Absägens unter Verwendung des Werkstückzuführspannmechanismusses 4 und des Werkstückrückzugmechanismusses 10 entsprechend den Figuren 23(A)-(D)der Werkstoffrest Wr weder zugeführt noch ergriffen werden, wie in Fig. 23(E) gezeigt ist. Entsprechend kann die Apparatur von Patentdokument 1, sobald der Werkstückzuführspannmechanismus 4 nicht mehr in der Lage ist, den Werkstoff zuzuführen, "nurmehr eine einzige weitere" Abtrennoperation ausführen.

Einer der Gegenstände dieser Erfindung ist es, weiteres Absägen mittels einer Sägemaschine mit Kreissägeblatt unter Beibehaltung der Bearbeitungsgenauigkeit auch dann zu ermöglichen, wenn keine Zuführung mehr möglich ist.

Eine Sägemaschine mit Kreissägeblatt gemäß der vorliegenden Erfindung, die für die Erreichung des voranstehend geschilderten Ziels konfiguriert ist, umfasst: eine Spindelstockvorschubeinheit für den Vorschub eines Spindelstocks zwischen einer Bereitschaftsposition und einer Schnittposition, wobei der Spindelstock einen Kreissägeblattmotor für den rotativen Antrieb eines Kreissägeblatts aufweist; eine Zuführspanneinheit für das Zuführen des Werkstücks durch Vorschieben in die Schnittposition; eine Hauptspanneinheit zum Festhalten des Werkstücks an vorgegebenen Positionen vor und hinter der Schnittposition sowie über die Schnittposition hinweg; sowie eine Steuereinrichtung für das Absägen auf feste Länge, die den Kreissägeblattmotors, die Spindelstockvorschubeinheit, die Zuführspanneinheit und die Hauptspanneinheit zur Ausführung des Absägens auf feste Länge antriebsmässig steuert, wobei die Kreissägemaschine ferner durch die folgenden Merkmale gekennzeichnet ist:
(1) dass die Hauptspanneinheit eine hintere und eine vordere Spanneinheit umfasst, wobei die hintere Spanneinheit in Vorwärts- und Rückwärtsrichtung in einer vorgegebenen Position hinter der Schnittposition fixiert ist und die vordere Spanneinheit als ihre beim Sägeschnitt voreingestellte Position eine vorgegebene Position vor und über der Schnittposition relativ zur hinteren Spanneinheit aufweist, wobei die vordere Spanneinheit in Vorwärts- und Rückwärtsrichtung in einem Bereich zwischen einer Position in Vorwärtsrichtung von ihrer voreingestellten Position und einer hintersten Position beweglich angeordnet ist, in der hintere Enden der Spannbacken der vorderen Spanneinheit mit vorderen Enden der Spannbacken der hinteren Spanneinheit in Kontakt sind, wobei die vordere und die hintere Spanneinheit gesonderte Spannzylinder aufweisen, die unabhängig voneinander gesteuert werden können, um das Spannen und Entspannen unabhängig voneinander ausführen zu können;
(2) Werkstückendflächensensoren für die Erkennung eines hinteren Werkstückendes; und
(3) dass die Steuereinrichtung für das Absägen auf feste Länge so konfiguriert ist, dass sie den Steuerungsprozess derart ausführt, dass die folgenden Mittel implementiert werden:
   (3A) ein Feste-Länge-Absäge-Mittel zum Sägen des Werkstückmaterials auf eine feste Länge durch wiederholtes Ausführen des folgenden Steuerungsprozesses: Veranlassen der Zuführspanneinheit, das Werkstück in einer Bereitschaftsposition zu spannen und um einen festen Zuführbetrag von der Bereitschaftsposition aus bei ungespannt bleibender vorderer und ungespannt bleibender hinterer Spanneinheit vorzubewegen; nach Ausführen des Zuführens Veranlassen der vorderen und der hinteren Spanneinheit, das Werkstück jeweils an der entsprechenden vorgegebenen Position der Spanneinheit vor und hinter einer Schneidlinie zu spannen; Betreiben des Kreissägeblattmotors und der Spindelstockvorschubeinheit zum Sägen des Werkstücks; nach Ausführen des Sägens des Werkstücks Veranlassen der Zuführspanneinheit, das Werkstück zu entspannen und nach dem Zurückfahren in ihre Bereitschaftsposition das Werkstück zu spannen; Veranlassen der vorderen und der hinteren Spanneinheit, das Werkstück zu entspannen; nach dem Veranlassen der Zuführspanneinheit, aus der Bereitschaftsposition um den Betrag der festen Länge mit durch die Zuführspanneinheit gespanntem Werkstück vorzufahren, Veranlassen der vorderen und der hinteren Spanneinheit, das Werkstück jeweils an der entsprechenden vorgegebenen Position der Spanneinheit vor und hinter einer Schneidlinie zu spannen; und Betreiben des Kreissägeblattmotors und der Spindelstockvorschubeinheit zum Sägen des Werkstücks;
   (3B) ein Bestimmungsmittel zur Berechnung einer verbleibenden Länge des Werkstücks, das dem Sägen auf Abschnitte fester Länge unterworfen ist, auf der Grundlage von Erkennungssignalen der Werkstückendflächensensoren und Feststellung, ob die verbleibende Länge noch oder nicht mehr dafür ausreicht, dass die Zuführspanneinheit das Werkstück um den Betrag der festen Länge zuführen kann;
   (3C) wenn das Bestimmungsmittel feststellt, dass die verbleibende Länge des Werkstücks nicht mehr dafür ausreicht, dass die Zuführspanneinheit das Werkstück um den Betrag der festen Länge zuführen kann, ein Mittel zum Vorziehen des Werkstücks, das die vordere Spanneinheit veranlasst, bei ungespanntem Werkstück in die hinterste Position zurückzufahren, und die vordere Spanneinheit anschließend veranlasst, das Werkstück allein zu spannen und um einen vorbestimmten Vorziehbetrag zuzuführen, um das Werkstück, das um die feste Länge nicht mehr vorgeschoben werden kann, in Vorwärtsrichtung um die Länge gleich dem Zuführbetrag für die feste Länge von der Schneidlinie aus zu positionieren; und
   (3D) ein Werkstückreststücksägemittel, das, nachdem das Mittel zum Vorziehen des Werkstücks betätigt worden ist, um die vordere Spanneinheit zum Vorziehen des Werkstücks zu veranlassen, die hintere Spanneinheit veranlasst, das Werkstück zu spannen, und die vordere Spanneinheit, das Werkstück zu entspannen und zurückzufahren; das ferner die vordere Spanneinheit veranlasst, in der vorgegebenen Position in Vorwärtsrichtung von der Schneidlinie anzuhalten und dann das Werkstück wieder zu spannen; und das den Kreissägeblattmotor und die Spindelstockvorschubeinheit zum Sägen des Werkstücks betreibt, das durch die vordere und die hintere Spanneinheit in den vorgegebenen Positionen vor und hinter der Schnittposition gespannt ist, so dass das Werkstückreststück gesägt wird, das durch die Zuführspanneinheit um den Betrag der festen Länge nicht mehr vorgeschoben werden kann.

Nach der Konfiguration der erfindungsgemäßen Sägemaschine mit Kreissägeblatt kann die Hauptspanneinheit das Werkstück mit der vorderen und der hinteren Spanneinheit in den vorgegebenen Positionen vor und hinter der Schnittposition spannen. Dadurch ist das Werkstück auf beiden Seiten der Schneidlinie unterstützt, so dass das Kreissägeblatt den Sägeschnitt bei ausreichender Unterdrückung von Werkstückschwingungen ausführen kann. Dementsprechend wird die Schneidoperation auf feste Länge mit hoher Genauigkeit ausgeführt. Außerdem ist die vordere Spanneinheit derart ausgelegt, dass sie vor- und zurückbewegt werden kann, und die vordere und die hintere Spanneinheit können unabhängig voneinander spannen und entspannen. Aus diesem Grunde kann das Werkstückvorziehmittel den Werkstückzustand der Spannung durch die in ihrer Position fixierte hintere Spanneinheit beibehalten, wenn es die vordere Spanneinheit veranlasst, in die hinterste Position zurückzufahren, in der die Backen der vorderen und der hinteren Spanneinheit in Kontakt miteinander gebracht sind. Das ermöglicht der vorderen Spanneinheit, das Werkstück auch dann auszuziehen, wenn die Zuführspanneinheit das Werkstück nicht mehr zu spannen vermag. Ferner kann die hintere Spanneinheit, während die vordere Spanneinheit bei Rückzug in ihre hinterste Position das Werkstück spannt, veranlasst werden, das Werkstück zu entspannen. Das seinerseits gestattet es, dass nur die vordere Spanneinheit das Werkstück spannt und vorwärts bewegt. Auf diese Weise sorgt Vorwärts- und Rückwärtsbewegung der vorderen Spanneinheit für Zuführung um feste Länge, nachdem die Zuführspanneinheit keine Zuführung um eine feste Länge mehr auszuführen vermag. Ob der voranstehend geschilderte Werkstückvorzug durch die vordere Spanneinheit auszuführen ist oder nicht, wird auf der Grundlage der verbleibenden Länge des Werkstücks, das dem Sägen auf Abschnitte fester Länge unterworfen ist, festgestellt, wobei die verbleibende Länge auf der Grundlage von Erkennungssignalen der Werkstückendflächensensoren errechnet wird. Das hat die genaue Feststellung des Zeitpunkts zum Ergebnis, in dem die Zuführung um eine feste Länge durch die Zuführspanneinheit in das Vorziehen des Werkstücks durch die vordere Spanneinheit umzuschalten ist.

Die erfindungsgemäße Sägemaschine mit Kreissägeblatt kann ferner eines oder beide der folgenden Merkmale (3E) und (3F) aufweisen, und zwar:
(3E) dass das Werkstückvorziehmittel derart konfiguriert ist, dass es die vordere Spanneinheit aus der hintersten Position um den Zuführbetrag der festen Länge zusammen mit dem durch die vordere Spanneinheit gespannten Werkstück vorzieht;
(3F) dass das Werkstückvorziehmittel derart konfiguriert ist, dass es: die Zuführspanneinheit veranlasst, das Werkstück nach der Vorwärtsbewegung aus der Bereitschaftsposition zu spannen und von dieser Spannposition zu einem vorwärts gerichteten Ende zu bewegen; die aktuell am vorwärts gerichteten Ende befindliche Zuführspanneinheit veranlasst, das Werkstück an die Hauptspanneinheit zu übergeben, während die Zuführspanneinheit das Werkstück dadurch spannt, dass sie die hintere Spanneinheit der Hauptspanneinheit zum Spannen des Werkstücks veranlasst; die vordere Spanneinheit veranlasst, das Werkstück zu entspannen und in die hinterste Position zurückzufahren; und anschließend die vordere Spanneinheit veranlasst, das Werkstück in der hintersten Position allein zu spannen und das Werkstück um die Länge gleich dem Zuführbetrag für die feste Länge minus der voranstehend erwähnten Bewegung der Zuführspanneinheit zuzuführen, so dass das Vorziehen des Werkstücks ausgeführt wird.

Die Sägemaschine mit Kreissägeblatt, die ferner das Merkmal (3E) aufweist, ist so konfiguriert, dass sie, sobald die Zuführspanneinheit die Zuführung um eine feste Länge nur noch schwierig ausführen kann, nur auf dem Prinzip des Vorziehens des Werkstücks durch die vordere Spanneinheit basiert, um die nächstfolgende Zuführung um eine feste Länge zu realisieren.

Die Sägemaschine mit Kreissägeblatt, die ferner das Merkmal (3F) aufweist, ist so konfiguriert, dass sie, sobald die Zuführspanneinheit die Zuführung um eine feste Länge nur noch schwierig ausführen kann, mit der Zuführspanneinheit die größtmögliche Zuführung ausführt und den Restbetrag durch Ziehen mit der vorderen Spanneinheit erreicht.

Die Sägemaschine mit Kreissägeblatt, die beide Merkmale (3E) und (3F) aufweist, ist so konfiguriert, dass sie, sobald die Zuführspanneinheit die Zuführung um eine feste Länge nur noch schwierig ausführen kann, mit der Zuführspanneinheit die größtmögliche Zuführung ausführt und den Restbetrag mittels der vorderen Spanneinheit erreicht und, sobald die Zuführspanneinheit die Zuführung um eine feste Länge später nur schwierig vollenden kann, nur auf dem Prinzip des Vorziehens des Werkstücks durch die vordere Spanneinheit basiert, um die nächstfolgende Zuführung um eine feste Länge zu realisieren. Anders ausgedrückt, ist die Maschine so konfiguriert, dass sie ein Umschalten der Werkstückzuführung vollzieht, sobald die Zuführung um eine feste Länge schwierig wird.

Die erfindungsgemäße Sägemaschine mit Kreissägeblatt kann desweiteren die Merkmale (4) und (3G) aufweisen, und zwar:
(4) dass Luftdüsen nahe dem mit Schneiden besetzten Rand des auf dem Kreissägeblattmotor montierten Kreissägeblatts vorgesehen sind, wobei die Luftdüsen dazu dienen, Druckluft in Werkstückzuführungsrichtung zu blasen; und
   (3G) dass die Steuereinrichtung für das Absägen auf feste Länge ferner so konfiguriert ist, dass sie den Steuerungsprozess derart ausführt, dass sie ein Sägeblattrückzugsteuermittel zur Verfügung stellt, das die Zuführspanneinheit veranlasst, das Werkstück zu spannen und um einen kleinen Betrag zurückzuziehen, wenn die Spindelstockvorschubeinheit den Kreissägeblattmotor aus der Schnittposition in die Bereitschaftsposition zurückfährt, bis das Bestimmungsmittel feststellt, dass die verbleibende Länge des Werkstücks nicht mehr dafür ausreicht, dass die Zuführspanneinheit das Werkstück um den Betrag der festen Länge zuführen kann, und nach der Feststellung des Bestimmungsmittels, dass die Zuführspanneinheit das Werkstück nicht mehr um den Betrag der festen Länge zuführen kann, das Sägeblattrückzugsteuermittel den Kreissägeblattmotor veranlasst, den Rückzug nach dem Veranlassen des Blasens von Druckluft aus den Druckluftdüsen zu beginnen, wenn die Spindelstockvorschubeinheit den Kreissägeblattmotor aus der Schnittposition in die Bereitschaftsposition zurückfährt, wobei das Sägeblattrückzugsteuermittel weiterhin veranlasst, dass Druckluft aus den Druckluftdüsen mindestens so lange geblasen wird, bis der Schneidenrand des Kreissägeblatts die Schnittfläche des Werkstücks in Richtung Bereitschaftsposition verlassen hat.

Aufgrund der weiteren Merkmale (4) und (3G) wird, sobald die Zuführspanneinheit das Zuführen um feste Länge nicht ausführen kann, bei der Ausführung der Sägeoperation von den Druckluftdüsen Druckluft ausgeblasen, wenn der Kreissägeblattmotor-Spindelstock in die Bereitschaftsposition zurückgefahren wird. Die Blasrichtung ist dieselbe, in der das Werkstück zugeführt wird, und das Blasen erfolgt in der Nähe des Schneidenrands des Kreissägeblatts. Entsprechend wird das gesamte Kreissägeblatt geringfügig derart abgebogen, dass zwischen Schneidenrand und Werkstückreststück ein Abstand entsteht. Dadurch wird verhindert, dass der Schneidenrand des Kreissägeblatts mit der Schnittfläche des Werkstücks in Berührung gerät, wenn der Kreissägeblattmotor in die Bereitschaftsposition zurückgefahren wird. Dieses Merkmal ist besonders wirkungsvoll, wenn die Erfindung in einer Sägemaschine mit einem Kreissägeblatt wie beispielsweise einem hartmetallbestückten Sägeblatt angewendet wird, dessen Schneidenrand in Vorwärts- und Rückwärtsrichtung über den Scheibenteil des Blatts herausragt (in Dickenrichtung). Solange die Zuführspanneinheit das Werkstück frei zuzuführen vermag, kann sie das Werkstück zurückziehen, wenn der Kreissägeblattmotor in die Bereitschaftsposition zurückgefahren wird. Sobald das Werkstück jedoch durch die vordere Spanneinheit bewegt werden muss, kann das Werkstück durch die Zuführspanneinheit nicht mehr zurückgezogen werden. Das Merkmal des Einsatzes von Druckluft zum Abbiegen des Kreissägeblatts ist effektiv, weil es das genaue Sägen auf feste Länge des Werkstückabschnitts ermöglicht, der herkömmlicherweise als Werkstückreststück angesehen wird. Zweck des Einsatzes der Zuführspanneinheit zum Zurückziehen des Werkstücks während der Phase der Zuführung auf feste Länge ist es, die Anzahl der Einleitungen von Biegespannung in das Kreissägeblatt durch Druckluft zu verringern.

Durch die vorliegende Erfindung ist es möglich, mit einer Sägemaschine mit Kreissägeblatt selbst dann noch Sägeschnitte auszuführen, wenn keine Zuführung mehr möglich ist, wobei die Bearbeitungsgenauigkeit erhalten bleibt. Das führt zu einer verringerten Zahl von Werkstückreststücken.

Fig. 1 zeigt eine Sägemaschine der Ausgestaltung 1, wobei Fig. 1(A) eine schematische Darstellung der gesamten Apparatur und Fig. 1(B) eine schematische Darstellung des Teils ist, der das Zuführen um eine feste Länge betrifft.
Fig. 2 zeigt den Teil der Sägemaschine der Ausgestaltung 1 mit dem Kreissägeblatt, wobei Fig. 2(A) eine Seitenansicht von rechts und Fig. 2(B) eine horizontale Schnittansicht ist.
Fig. 3 ist eine schematische Darstellung des Steuerungssystems der Sägemaschine der Ausgestaltung 1.
Fig. 4 ist ein Flussdiagramm der Prozedur des Betriebs der Sägemaschine der Ausgestaltung 1.
Fig. 5 ist ein Flussdiagramm des von der Sägemaschine der Ausgestaltung 1 ausgeführten Steuerungsprozesses.
Fig. 6 ist ein Flussdiagramm des von der Sägemaschine der Ausgestaltung 1 ausgeführten Steuerungsprozesses.
Fig. 7 ist eine erklärende Ansicht, die die Wirkung der beim Zurückfahren des Kreissägeblatts in Ausgestaltung 1 geblasenen Druckluft zeigt.

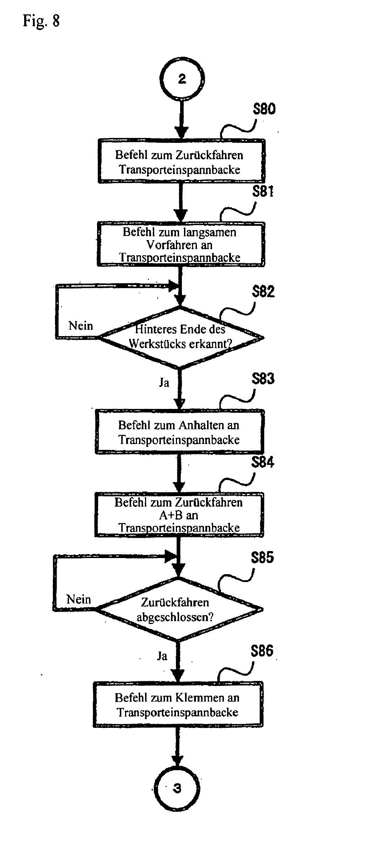

Fig. 8 ist ein Flussdiagramm des von der Sägemaschine der Ausgestaltung 1 ausgeführten Steuerungsprozesses.
Fig. 9 ist ein Flussdiagramm des von der Sägemaschine der Ausgestaltung 1 ausgeführten Prozesses des Absägens auf feste Länge.
Fig. 10 ist ein Flussdiagramm des von der Sägemaschine der Ausgestaltung 1 ausgeführten Prozesses des Absägens auf feste Länge.
Fig. 11 ist ein Flussdiagramm des von der Sägemaschine der Ausgestaltung 1 ausgeführten Prozesses des Absägens auf feste Länge.
Fig. 12 ist ein Flussdiagramm des von der Sägemaschine der Ausgestaltung 1 ausgeführten Prozesses des Absägens auf feste Länge.
Fig. 13 ist ein Flussdiagramm des von der Sägemaschine der Ausgestaltung 1 ausgeführten Prozesses des Absägens auf feste Länge.
Fig. 14 ist eine schematische Darstellung des von Ausgestaltung 1 ausgeführten Prozesses des Absägens auf feste Länge.
Fig. 15 ist eine schematische Darstellung des von Ausgestaltung 1 ausgeführten Prozesses des Absägens auf feste Länge.
Fig. 16 ist eine schematische Darstellung des von Ausgestaltung 1 ausgeführten Prozesses des Absägens auf feste Länge.
Fig. 17 ist eine schematische Darstellung des von Ausgestaltung 1 ausgeführten Prozesses des Absägens auf feste Länge.
Fig. 18 ist eine schematische Darstellung des von Ausgestaltung 1 ausgeführten Prozesses des Absägens auf feste Länge.

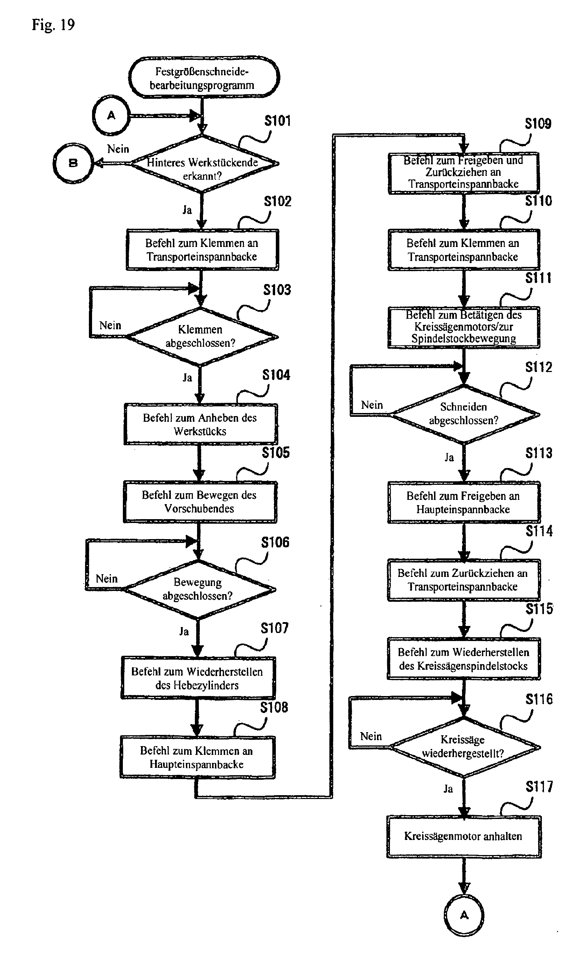

Fig. 19 ist ein Flussdiagramm des von der Sägemaschine der Ausgestaltung 2 ausgeführten Prozesses des Absägens auf feste Länge.
Fig. 20 ist ein Flussdiagramm des von der Sägemaschine der Ausgestaltung 2 ausgeführten Prozesses des Absägens auf feste Länge.
Fig. 21 ist ein Flussdiagramm des von der Sägemaschine der Ausgestaltung 2 ausgeführten Prozesses des Absägens auf feste Länge.
Fig. 22 ist ein Flussdiagramm des von der Sägemaschine der Ausgestaltung 2 ausgeführten Prozesses des Absägens auf feste Länge.
Fig. 23 ist eine erklärende Ansicht des Stands der Technik.

Im Folgenden werden Ausgestaltungen beschrieben, die einen Kreissägeblattmotor für den rotativen Antrieb eines Kreissägeblatts, eine Motorverschiebeeinheit für die Verschiebung den Kreissägeblattmotors zwischen einer Bereitschaftsposition und einer Schnittposition, eine Zuführeinheit für das Zuführen des Werkstücks in die Schnittposition; eine Spanneinheit für das Spannen des Werkstücks in der Schnittposition sowie auch alle in den voranstehenden Abschnitten beschriebenen Merkmale umfasst.

Im Folgenden wird Ausgestaltung 1 der Erfindung unter Bezug auf die Zeichnungen in verdeutlichender Weise beschrieben.

Wie in Fig. 1(A) gezeigt, umfasst die Apparatur 1 von Ausgestaltung 1 eine automatische Sägemaschine 3 mit Kreissägeblatt, einen Rollenförderer 5 für die Zuführung des Werkstücks W in der automatischen Sägemaschine 3 mit Kreissägeblatt und einen Speicher 7 für die zu bearbeitenden Werkstücke. Die automatische Sägemaschine 3 mit Kreissägeblatt umfasst ferner einen Kreissägeblattmotor 11, auf dem ein Kreissägeblatt 9 montiert ist, eine Hauptspanneinheit 13 zum Spannen des Werkstücks W in der Nähe der Schnittposition des Kreissägeblatts 9, eine Zuführspanneinheit 15 zur Bewegung zwischen einem vorwärtsgerichteten Ende nahe der Hauptspanneinheit 13 und einem Rückzugsende nahe dem Rollenförderer 5, einen Spindelstock 10 und eine Führung 19 des Spindelstocks für die Hin- und Herbewegung des Kreissägeblattmotors 11 zwischen der Schneid- und der Bereitschaftsposition.

Die Hauptspanneinheit 13 ist derart gestaltet, dass sie einen Spannzylinder zum Spannen und Entspannen aufweist und das Werkstück W an zwei Positionen spannt, nämlich an einer unmittelbar vorderen und einer unmittelbar hinteren Position mit der Schneidlinie CL des Kreissägeblatts 9 in der Mitte zwischen diesen Positionen. Im Besonderen umfasst, wie in Fig. 1(B) gezeigt, die Hauptspanneinheit 13 eine hintere Spanneinheit 30, die mit ihrem vorderen Ende an einer Position unmittelbar hinter der Schneidlinie CL angeordnet ist, und eine vordere Spanneinheit 40, die an einer Position unmittelbar vor der Schneidlinie CL in deren für den Schnitt vorgegebenen Position angeordnet ist.

Die hintere Spanneinheit 30 umfasst eine feststehende Spannbacke 31 und eine bewegliche Spannbacke 32 mit einem Hydrozylinder 33, der dafür ausgelegt ist, die bewegliche Spannbacke 32 in Richtung auf die feststehende Spannbacke 31 zu bewegen, um das Werkstück dazwischen zu spannen. In gleicher Weise umfasst die vordere Spanneinheit 40 eine feststehende Spannbacke 41 und eine bewegliche Spannbacke 42 mit einem Hydrozylinder 43, der dafür ausgelegt ist, die bewegliche Spannbacke 42 in Richtung auf die feststehende Spannbacke 41 zu bewegen, um das Werkstück dazwischen zu spannen.

Als ein Merkmal dieser Ausgestaltung sind die hintere Spanneinheit 30 und die vordere Spanneinheit 40 so gestaltet, dass sie Spannen und Entspannen unabhängig voneinander ausführen. Als ein zusätzliches Merkmal ist die Grundplatte 44 der vorderen Spanneinheit 40 so gestaltet, dass sie entlang der sich in Vorwärts- und Rückwärtsrichtung erstreckenden Führungsstange 45 bewegt werden kann. Das hintere Ende ihres Bewegungsbereichs befindet sich in der vorderen Endposition P1 der hinteren Spanneinheit 30, wobei die Grundplatte zwischen P1 und P3 bewegt werden kann. Damit ist die vordere Spanneinheit 40 gemäß dieser Ausgestaltung zu der Position bewegbar, in der sie erforderlichenfalls mit dem vorderen Ende der hinteren Spanneinheit 30 in Kontakt gelangt. Anzumerken ist, dass die Grundplatte 34 der hinteren Spanneinheit 30 feststehend und unbeweglich ist.

Die Zuführspanneinheit 15 umfasst eine feststehende Spannbacke 51 und eine bewegliche Spannbacke 52 mit einem Hydrozylinder 53, der dafür ausgelegt ist, die bewegliche Spannbacke 52 in Richtung auf die feststehende Spannbacke 51 zu bewegen, um das Werkstück W dazwischen zu spannen. Die Grundplatte 54 der Zuführspanneinheit 15 ist so gestaltet, dass sie entlang der sich in Vorwärts- und Rückwärtsrichtung erstreckenden Führungsstange 55 im Bereich zwischen P4 und P5 bewegt werden kann. Außerdem sind auf den Backen 51 photoelektrische Sensoren 56 in der Nähe der oberen Enden angebracht, um das hintere Ende des Werkstücks W zu detektieren.

Die Vorwärts- und Rückwärtsbewegungen der Zuführspanneinheit 15 und der vorderen Spanneinheit 40 werden durch ihre zugehörigen Servomotoren und Spindeltriebe gesteuert. Die Zuführspanneinheit 15 ist so gestaltet, dass sie innerhalb ihres Bewegungsbereichs mit der Position P4 des vorderen Endes als Ausgangspunkt hin- und zurückbewegt werden kann. Die vordere Spanneinheit 40 ist so gestaltet, dass sie innerhalb ihres Bewegungsbereichs mit dem hinteren Ende P1 als Ausgangspunkt hin- und zurückbewegt werden kann.

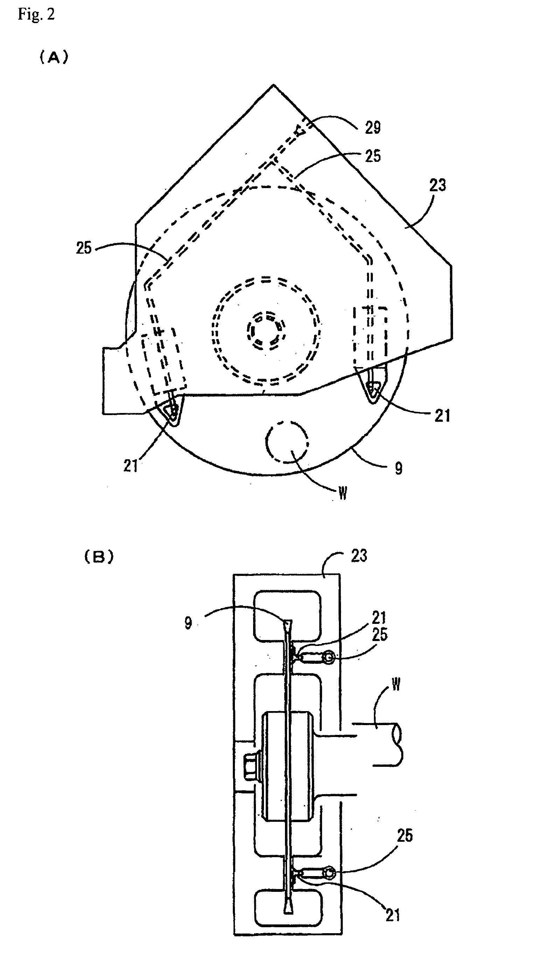

Wie in Fig. 2 gezeigt, ist die automatische Sägemaschine 3 der Sägeapparatur 1 gemäß Ausgestaltung 1 mit zwei Druckluftdüsen 21 zum Blasen von Druckluft auf die Werkstückzuführseite des Kreissägeblatts 9 versehen. Diese Druckluftdüsen 21 befinden sich innerhalb der am Kreissägeblattmotor 11 abnehmbar befestigten Blattabdeckung 23. Jede Druckluftdüse 21 ist so positioniert, dass sie Luft in Umfangsnähe des Kreissägeblatts 9 ausbläst.

Innerhalb der Blattabddeckung 23 ist ein Luftdurchlass 25 vorgesehen, der den Druckluftdüsen 21 Druckluft zuleitet. Ein flexibel biegsamer Schlauch 27 verbindet den Luftdurchlass 25 und eine firmeneigene Druckluftquelle 2. Am Einlass des Luftdurchlasses 25 ist ein Druckluftventil 29 angeordnet, das elektromagnetisch geöffnet und geschlossen wird.

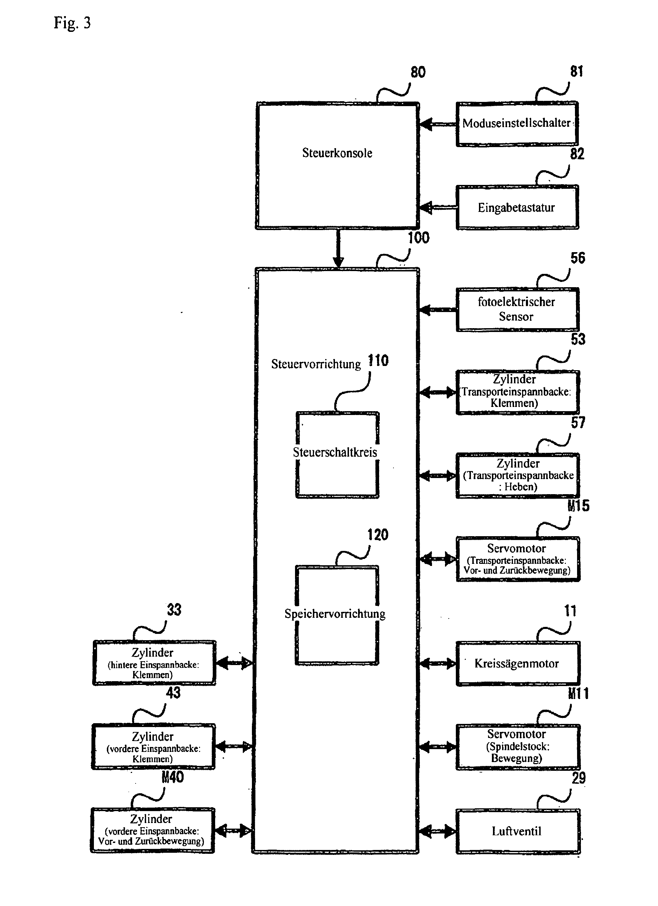

Die Sägeapparatur 1 von Ausgestaltung 1 umfasst ein Steuerungssystem, das konfiguriert ist, wie in Fig. 3 dargestellt. Die Steuereinheit 100 ist so gestaltet, dass sie Signale von den photoelektrischen Sensoren 56 empfängt, die in der Zuführspanneinheit 15 zur Detektierung des hinteren Werkstückendes vorgesehen sind, und Signale vom Bedienfeld 80. Ferner ist die Steuereinheit 100 so gestaltet, dass sie Steuersignale an den Spannzylinder 53, den Hubzylinder 57 und den Servomotor M15 für die Vor- und Zurückbewegung der Zuführspanneinheit 15, den Spannzylinder 33 der hinteren Spanneinheit 30, den Spannzylinder 43 und den Servomotor M40 für die Vor- und Zurückbewegung der vorderen Spanneinheit 40, den Kreissägeblattmotor 11 und den Servomotor M11 für die Bewegung des Spindelstocks der Kreissägemaschine sowie das Druckluftventil 29 für die Zufuhr von Druckluft zu den Druckluftdüsen 21 abgibt. Die Steuereinheit 100 ist ferner so gestaltet, dass sie Gebersignale von den Servomotoren M15, M40 und M11 empfängt.

Das Bedienfeld 80 ist zur Eingabe verschiedener Einstell- und Zustandswerte vorgesehen. Das Bedienfeld von Ausgestaltung 1 weist einen Betriebsartenschalter 81 zum Umschalten zwischen einer ersten Betriebsart, in der das vordere Ende des Werkstücks W vor dem Beginn des Absägens auf feste Länge abgesägt wird, und einer zweiten Betriebsart, in der das Absägen auf feste Länge ohne Absägen des vorderen Endes des Werkstücks W ausgeführt wird. Außerdem ist ein Tastenfeld 82 für die Eingabe verschiedener Arten von Informationen vorgesehen.

Die Steuereinheit 100 umfasst einen Steuerkreis 110 und eine Speichereinrichtung 120. Der Steuerkreis 110 umfasst einen Computer, die Speichereinrichtung 120 besteht aus einer Festplatte und weiteren Komponenten. Der den Steuerkreis 110 bildende Computer führt die Verarbeitung auf der Basis eines Steuerprogramms für die Steuerung des Absägens auf feste Länge durch die automatische Sägemaschine 3 mit Kreissägeblatt und eines Steuerprogramms für die Berechnung des Betrags der Zuführung um eine feste Länge basierend auf den über das Eingabetastenfeld 82 eingebenen Informationen aus. Das Programm für die Berechnung des Betrags der Zuführung um eine feste Länge führt die Verarbeitung aus, um in der Speichereinrichtung 120 Informationen über das Werkstück wie Art und Durchmesser des Werkstücks W sowie den Betrag der Zuführung um eine feste Länge A zu speichern, der über das Bedienfeld 80 eingegeben worden ist.

Zusätzlich zu den oben beschriebenen Computerprogrammen und dem erwähnten Betrag der Zuführung um eine feste Länge A speichert die Speichereinrichtung 120 numerische Informationen, die zur Ausführung der Steuerungsinformationsverarbeitung erforderlich sind, wie z. B. Informationen über den Abstand B zwischen der Position des vorderen Endes der Zuführspanneinheit 15 und dem Kreissägeblatt 9 an der automatischen Kreissägemaschine 3 und einen Bezugswert α für das Absägen des vorderen Endes, der dann in Betracht kommt, wenn das vordere Ende abgesägt werden soll.

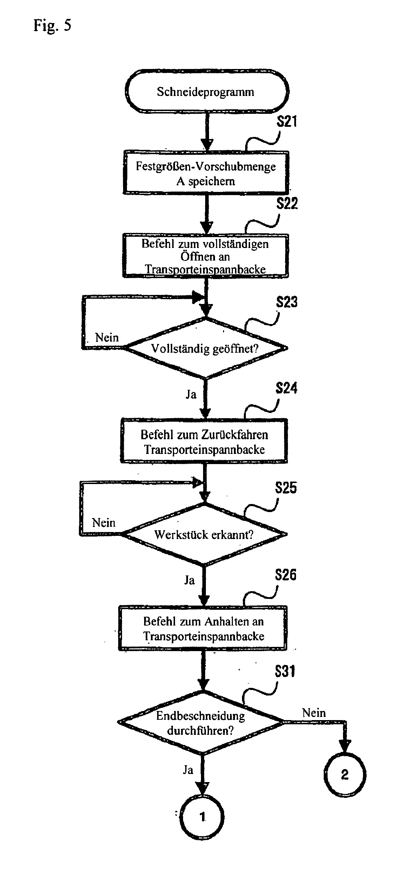

Im Folgenden wird beschrieben, wie die Sägeapparatur 1 der Ausgestaltung 1 zur Herstellung von Schmiederohlingen gleicher Masse aus dem Werkstück W, einer Rundstahlstange, eingesetzt wird. Zuerst wird unter Bezugnahme auf das Flussdiagramm von Fig. 5 das Vorgehen eines Operators beschrieben.
Der Operator gibt in die Steuereinheit die Stahlsorte und den Durchmesser des Werkstücks W ein, das vor dem Beginn der spanenden Bearbeitung in den Speicher 7 einzulegen ist (S1). Dann gibt der Operator als Bearbeitungsbedingung die Masse der zu fertigenden Rohlinge in die Steuereinheit ein (S2). Anschließend bedient der Operator den Betriebsartenschalter 81 der Steuereinheit, um zu wählen, ob das vordere Werkstückende abzusägen ist oder nicht. Nach der Eingabe dieser Bearbeitungsbedingungen lädt der Operator das im Speicher 7 gespeicherte Werkstück W auf den Rollenförderer 5, um das Werkstück W in die Position zu bringen, in der es die Zuführspanneinheit 15 sicher spannen kann (S4). Dann betätigt der Operator die Steuereinheit zur Ausgabe eines Befehls für den Beginn der Bearbeitung (S5).

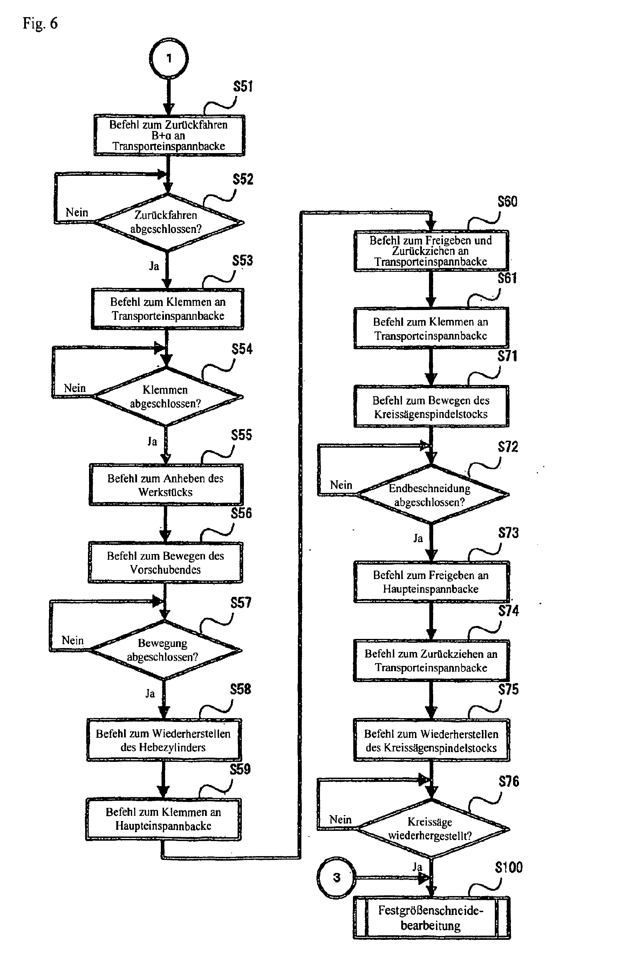

Sobald der Operator die Steuereinheit zwecks Ausgabe eines Befehls für den Beginn der Bearbeitung betätigt hat (S5), aktiviert der Computer der Steuereinheit ein Sägeprogramm, um den in Fig. 6 und den darauffolgenden Zeichnungen gezeigten Steuerungsprozess in Gang zu setzen.
Zu Beginn speichert der Computer den vom Bediener über das Bedienfeld 80 in die Speichereinrichtung 120 eingegebenen Betrag der Zuführung um eine feste Länge A (S21). Dann gibt der Computer an den Spannzylinder 53 der Zuführspanneinheit 15 einen Befehl "Vollständig öffnen" ab (S22). Wenn der Computer den Vollzug der Operation "Vollständig öffnen" durch den Spannzylinder 53 erkannt hat (JA bei S23), gibt er einen Rückfahrbefehl an den Servomotor M15 für die Vor- und Zurückbewegung der Zuführspanneinheit 15 (S24). Danach wartet der Computer auf ein Signal der Werkstückerkennung seitens der photoelektrischen Sensoren 56 (S25). Sobald der Computer ein Werkstückerkennungssignal von den photoelektrischen Sensoren 56 erhält (JA bei S26), gibt er einen Stoppbefehl an den Servomotor M15 für die Vor- und Zurückbewegung der Zuführspanneinheit 15 ab (S27). Dann bestimmt der Computer, welche der Betriebsarten Absägen des vorderen Endes oder Kein Absägen des vorderen Endes eingestellt worden ist (S31).

Wenn das Ergebnis der Bestimmung durch den Computer bei S31 aussagt, dass das vordere Ende abzusägen ist, gibt der Computer einen Befehl (Rückzugsbefehl) an den Servomotor M15 der Zuführspanneinheit 15 ab, die Zuführspanneinheit 15 um den Abstand B (den Abstand zwischen der vorderen Endposition und dem Kreissägeblatt 9) + α (den Bezugswert des Absägens des vorderen Endes) (S51) zurückzubewegen. Sobald der Computer erkannt hat, dass das durch den Servomotor M15 bewirkte Zurückziehen um B + α vollzogen ist (JA bei S52), gibt der Computer an den Spannzylinder 53 der Zuführspanneinheit 15 einen Befehl ab, der die Zuführspanneinheit 15 veranlasst, das Spannen auszuführen (S53). Sobald ein Signal dem Computer zeigt, dass die Spanneinheit gespannt hat (JA bei S54), gibt er an den Hubzylinder 57 der Zuführspanneinheit 15 einen Befehl ab, das Werkstück anzuheben (S55), sowie einen Befehl an den Servomotor M15, die Zuführspanneinheit 15 an das vordere Ende P4 zu bewegen (S56). Sobald der Computer ein Signal erhält, das anzeigt, dass die durch den Servomotor M15 bewirkte Bewegung an das vordere Ende vollzogen ist (JA bei S57), gibt er einen Rückkehrbefehl an den Hubzylinder 57 der Zuführspanneinheit 15 ab (S58) und ebenso Spannbefehle an den Spannzylinder 33 der hinteren Spanneinheit und den Spannzylinder 43 der vorderen Spanneinheit der Hauptspanneinheit 13 (S59). Dann gibt der Computer Befehle an den Spannzylinder 27 und den Servomotor M15 ab, die Zuführspanneinheit 15 zu entspannen und zurückzuziehen (S60), und sobald festgestellt wird, dass die Zuführspanneinheit 15 durch den Servomotor M15 in die vorgegebene Position zurückgezogen worden ist, gibt der Computer einen Befehl an den Spannzylinder 27 ab, Spannen zu vollziehen (S61). Die Serie von Befehlen, die bis zu diesem Zeitpunkt abgegeben worden ist, bewirkt, dass das Werkstück an seinen Platz gebracht und durch die Zuführspanneinheit 15 und die Hauptspanneinheit 13 gespannt wird, wobei das Werkstück um diejenige Länge über die Schnittposition hinausragt, die dem abzusägenden vorderen Endstück entspricht. In der Ausgestaltung befindet sich, sobald das vordere Endstück abgesägt ist, die Sägeapparatur in dem Zustand für einen sofortigen Beginn des Sägens auf feste Länge. Es ist zu beachten, dass sich in der Ausgestaltung der Ausdruck "vorgegebene Position" auf die Position der um den Betrag der Zuführung um die feste Länge vom vorderen Ende P4 aus zurückgezogenen Zuführspanneinheit 15 bezieht. Außerdem kann gemäß der Ausgestaltung das Werkstück W, weil es angehoben zugeführt wird, an seinen Platz gebracht werden, ohne dass in der Schnittposition mit dem Tisch kollidiert.

Danach gibt der Computer einen Antriebsbefehl an den Kreissägeblattmotor 11 und einen Befehl an den Servomotor M11 für den Vorschub des Spindelstocks ab, das vordere Ende abzusägen (S71). Sobald dem Computer Vollzug des Absägens vom Servomotor M11 für den Vorschub des Spindelstocks gemeldet ist (JA bei S72), gibt er einen Entspannbefehl an die beiden Spannzylinder 33 und 43 der Hauptspanneinheit 13 (S73) und einen Rückzugsbefehl an den Servomotor M15 für die Vor- und Zurückbewegung der Zuführspanneinheit 15 ab, um eine Kollision mit dem Kreissägeblatt zu vermeiden (S74). Der Computer gibt dann einen Befehl an den Servomotor M11 für den Kreissägeblattvorschub ab, damit der Spindelstock in die Bereitschaftsposition zurückkehrt (S75). Nach der Feststellung, dass die Kreissäge in die Bereitschaftsposition zurückgekehrt ist (JA bei S76), vollzieht der Computer den Steuerungsprozess, um Absägen auf feste Länge auszuführen, wie weiter unten beschrieben wird (S100).

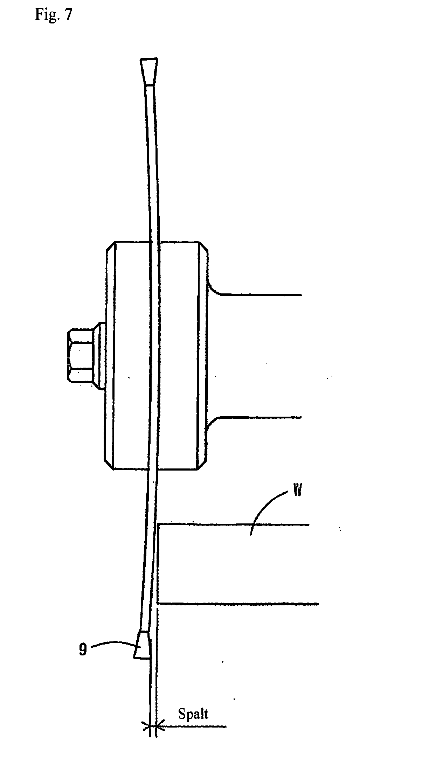

In der Ausgestaltung bewirkt, wie in Fig. 7 gezeigt, das Anblasen mit Druckluft, dass der Schneidenrand des Kreissägeblatts 9 um einen kleinen Betrag vom Werkstück W weggebogen wird, um damit einen Spalt zwischen dem Kreissägeblatt und der Schnittfläche am Werkstück W zu schaffen. Im Ergebnis braucht das Werkstück W vor dem Rückfahren der Kreissäge nicht zurückgezogen zu werden, um ein ungehindertes Zurückfahren des Kreissägeblatts 9 ohne Berührung zwischen Sägeblatt und Werkstück W zu gestatten.

Wenn die Betriebsart Kein Absägen gewählt ist, gibt der Computer anstelle des Steuerungsprozesses S51-S77, wie in Fig. 7 gezeigt, einen Befehl an den Servomotor M15 der Zuführspanneinheit 15 ab, die Zuführspanneinheit 15 an das Rückfahrende zu verfahren (S80), und dann einen Befehl an den Servomotor M15, die Zuführspanneinheit 15 mit geringer Geschwindigkeit vorzufahren (S81). Sobald das vordere Werkstückende aufgrund der von den photoelektrischen Sensoren 56 empfangenen Signale erkannt worden ist, gibt der Computer einen Befehl an den Servomotor M15 ab, die Zuführspanneinheit 15 anzuhalten (S82 und S83). Danach gibt der Computer einen Befehl an den Servomotor M15 ab, die Zuführspanneinheit 15 um einen Abstand A+B zurückzufahren (S84), und einen weiteren Befehl an den Spannzylinder 53, die Zuführspanneinheit 15 zum Spannen in der Rückzugsposition zu veranlassen (S85 und S86). Anschließend führt der Computer den Steuerungsprozesses für das Absägen auf feste Länge aus (S100).

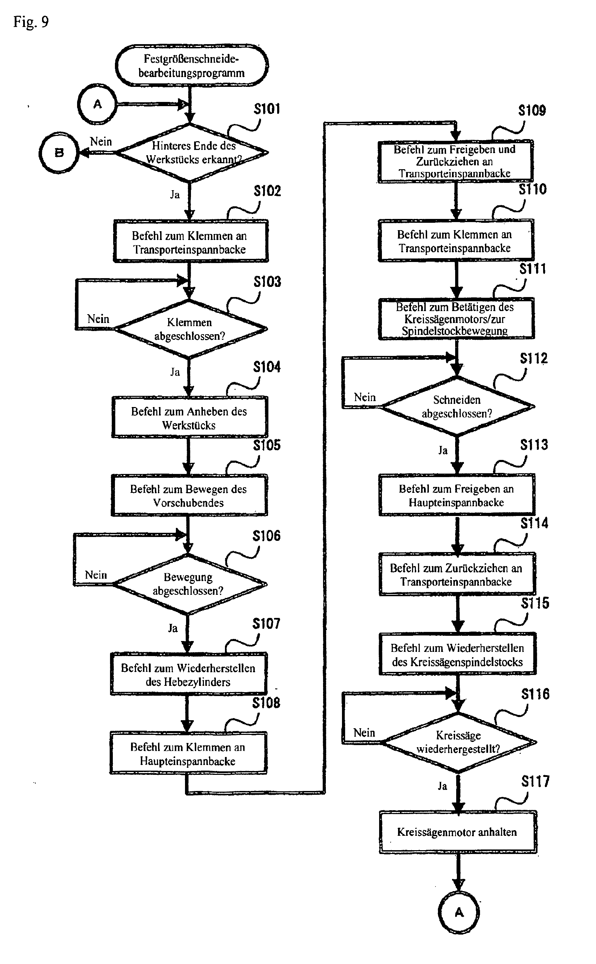

Um den Steuerungsprozesses für das Absägen auf feste Länge ausführen zu können, bestimmt der Computer, wie in Fig. 9 gezeigt, zuerst, ob Signale von den photoelektrischen Sensoren 56 der in die vorgegebene Position zurückgefahrenen Zuführspanneinheit 15 empfangen worden sind, die die Erkennung des Werkstücks anzeigen (S101). Wenn der Computer erkennt, dass derartige Erkennungssignale empfangen worden sind (JA bei S101), gibt er einen Befehl an den Spannzylinder 53 der Zuführspanneinheit 15 ab, die Zuführspanneinheit 15 zum Spannen zu veranlassen (S102). Nach dem Empfang eines Signals über den Vollzug des Spannens (JA bei S103), gibt er einen Hubbefehl an den Hubzylinder 57 der Zuführspanneinheit 15 ab, das Werkstück anzuheben (S104), sowie einen Befehl an den Servomotor M15, die Zuführspanneinheit 15 an das vordere Ende P4 zu verfahren (S105). Sobald vom Computer erkannt worden ist, dass die Zuführspanneinheit 15 an das vordere Ende P4 verfahren worden ist (JA bei S106), gibt er einen Rückkehrbefehl an den Hubzylinder 57 der Zuführspanneinheit 15 ab (S107) sowie Spannbefehle an den Spannzylinder 33 der hinteren Spanneinheit und den Spannzylinder 43 der vorderen Spanneinheit jeweils der Hauptspanneinheit 13 (S108). Dann gibt der Computer Befehle an den Spannzylinder 27 und den Servomotor M15 ab, die Zuführspanneinheit 15 zum Entspannen bzw. Zurückfahren zu veranlassen (S109), und wenn vom Computer erkannt worden ist, dass die Zuführspanneinheit 15 in ihre vorgegebene Position zurückgekehrt ist, gibt er einen Spannbefehl an den Spannzylinder 27 ab (S110).

Danach gibt der Computer einen Antriebsbefehl an den Kreissägeblattmotor 11 und einen Befehl an den Servomotor M11 für den Vorschub des Spindelstocks ab, das Absägen auszuführen (S111). Sobald dem Computer ein Signal über den Vollzug des Absägens vom Spindelstockverfahr-Servomotor M11 gemeldet worden ist (JA bei S112), gibt er einen Entspannbefehl an jeden der beiden Spannzylinder 33 und 43 der Hauptspanneinheit 13 ab (S113) sowie einen Rückkehrbefehl an den Hubzylinder und den Servomotor der Zuführspanneinheit 15, das Werkstück um einen geringen Betrag zurückzuziehen, um Kollision zu vermeiden (S114). Der Computer gibt dann einen Befehl an den Spindelstockvorschub-Servomotor M11 zum Rückzug des Spindelstocks in die Bereitschaftsposition ab (S115). Sobald er erkannt hat, dass die Kreissäge in die Bereitschaftsposition zurückgefahren ist (JA bei S116), gibt der Computer einen Befehl zum Anhalten des Kreissägeblattmotors 11 ab (S117).

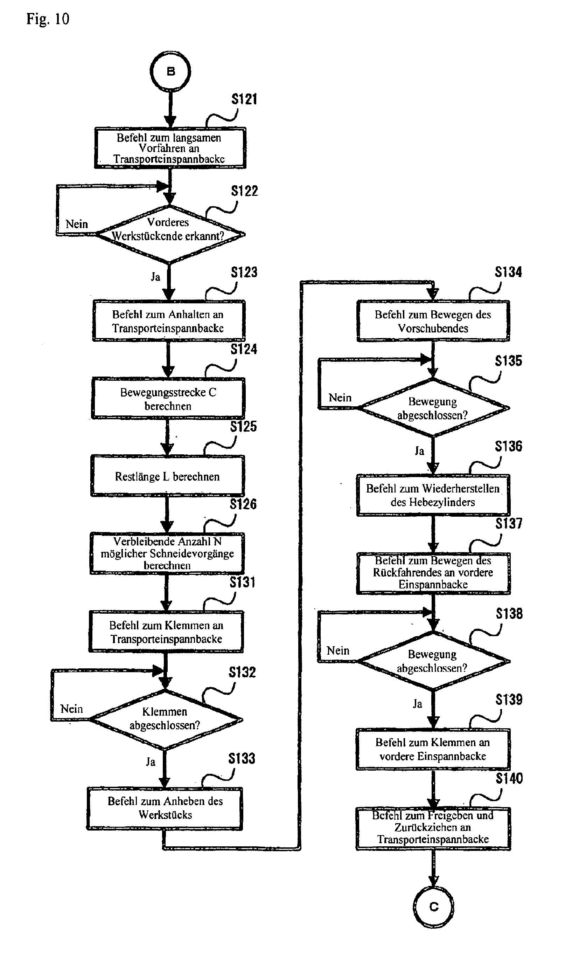

Wenn von den photoelektrischen Sensoren 56 der in ihre vorgegebene Position zurückgefahrenen Zuführspanneinheit 15 keine Werkstückerkennungssignale eingegangen sind (NO bei S101), wie in Fig. 10 gezeigt, gibt der Computer einen Befehl an den Servomotor M15 der Zuführspanneinheit 15 ab, die Einheit 15 mit geringer Geschwindigkeit vorzufahren (S121), sowie einen Anhaltebefehl an den Servomotor M15, wenn die photoelektrischen Sensoren 56 das hintere Ende des Werkstücks erkennen (S122 and S123). Dann berechnet er die Weglänge C zwischen der vorgegebenen Position für einen Vorschub um feste Länge und die Position, in der JA bei S122 bestimmt wird (S124). Weiterhin berechnet der Computer die verbleibende Länge L aus der apparaturspezifischen Dimension B (Abstand zwischen der vorderen Endposition P4 der Zuführspanneinheit 15 und dem Kreissägeblatt 9), den Zuführbetrag um feste Länge A und die Verfahrweglänge C (L=B+A-C) (S125). Anschließend berechnet er die verbleibende Anzahl N der möglichen Schneidoperationen durch Dividieren der verbleibenden Länge L minus der Länge X, die für das Ausführen des Spannens durch die hintere Spanneinheit 30 erforderlich ist (L-X), durch den Zuführbetrag um feste Länge A (S126). Bei dieser Berechnung bestimmt der Computer die verbleibende Anzahl N der möglichen Schneidoperationen unter Unterdrückung der Nachkommastellen des Werts (L-X)/A.

Dann gibt der Computer einen Befehl an den Spannzylinder 27 ab, die Zuführspanneinheit 15 zum Spannen in dieser Position zu veranlassen (S131 und S132), einen Hubbefehl an den Hubzylinder 57 der Zuführspanneinheit 15 (S133) und einen Befehl an den Servomotor M15, die Zuführspanneinheit 15 an das vordere Ende P4 zu verfahren (S134).

Sobald der Computer durch ein empfangenes Signal erkennt (JA bei S135), dass die Zuführspanneinheit 15 ihre Bewegung an das vordere Ende vollendet hat, gibt er einen Rückkehrbefehl an den Hubzylinder 57 der Zuführspanneinheit 15 ab (S136) und ebenso einen Befehl an den Servomotor M40 für die Vor- und Zurückbewegung der vorderen Spanneinheit 40, um die vordere Spanneinheit 40 an das Rückzugsende P1 zu verfahren (S137). Sobald der Computer durch ein empfangenes Signal erkennt, dass das Verfahren der vorderen Spanneinheit 40 ans Rückzugsende vollzogen ist (JA bei S138), gibt er einen Spannbefehl nur an den Spannzylinder 43 der vorderen Spanneinheit 40 ab (S139). Er gibt ferner Befehle an den Spannzylinder 27 und den Servomotor M15 der Zuführspanneinheit 15 ab, die Zuführspanneinheit 15 zu entspannen bzw. zurückzufahren (S140).

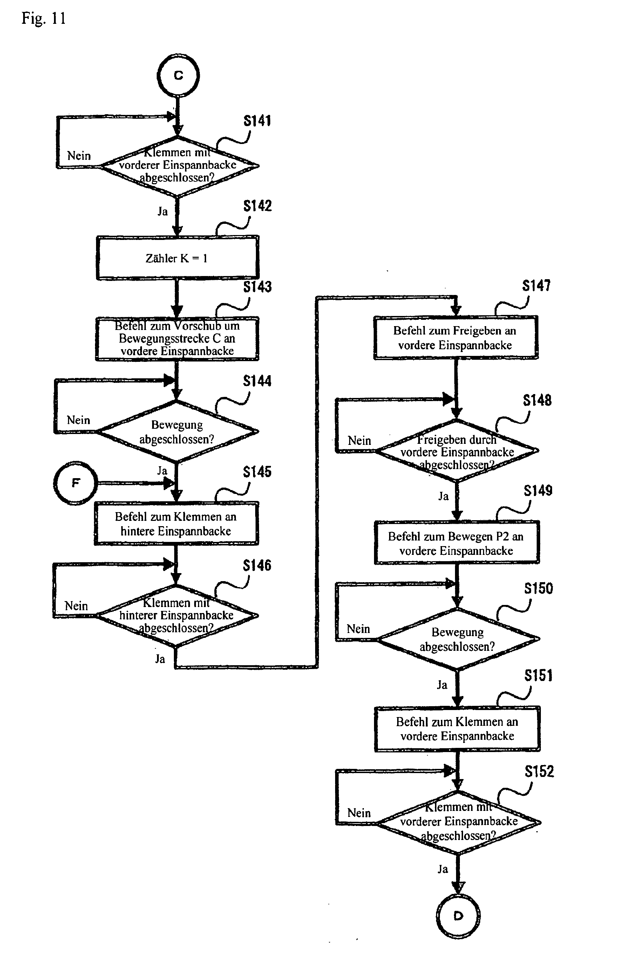

Anschließend setzt, wie in Fig. 11 gezeigt, der Computer, wenn er den Vollzug des Spannens durch die vordere Spanneinheit 40 erkannt hat (JA bei S141), den Zählwert K auf 1 (S142) und gibt einen Befehl an den Servomotor M40 für die Vor- und Zurückbewegung ab, um die vordere Spanneinheit 40 um den bei S124 berechneten Abstand C zu verfahren (S143). Wenn durch den Computer erkannt wird, dass das Vorfahren vollzogen ist (JA bei S144), gibt er einen Spannbefehl an den Spannzylinder 33 der hinteren Spanneinheit 30 ab (S145). Bei Erkennung des Vollzugs des Spannens durch die hintere Spanneinheit 30 (JA bei S146) gibt der Computer einen Entspannbefehl an die vordere Spanneinheit 40 ab (S147). Sobald er erkannt hat, dass die vordere Spanneinheit 40 das Entspannen vollzogen hat (JA bei S148), gibt er einen Befehl an den Servomotor M40 für die Vor- und Zurückbewegung ab, um die vordere Spanneinheit 40 in die vorgegebene Position P2 zu verfahren (S149). Sobald der Computer erkennt, dass das Verfahren vollzogen ist (JA bei S150), gibt er einen Spannbefehl an den Spannzylinder 43 der vorderen Spanneinheit 40 ab (S151). Das bewirkt, dass das Werkstück W durch sowohl die vordere Spanneinheit 40 als auch die hintere Spanneinheit 30 gespannt wird.

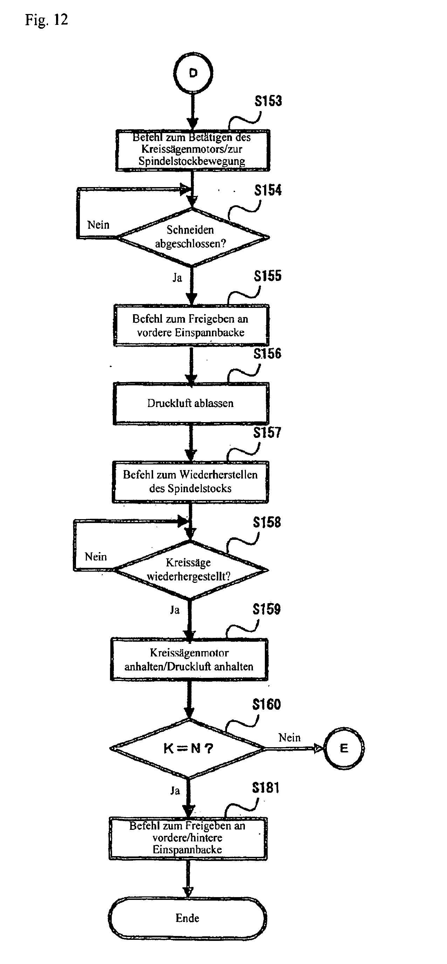

Nachdem Computer erkannt hat, dass die vordere Spanneinheit 40 das Spannen vollzogen hat (JA bei S152), gibt er einen Antriebsbefehl an den Kreissägeblattmotor 11 und einen Befehl an den Servomotor M11 für den Vorschub des Spindelstocks ab, das Absägen auszuführen (S153), wie in Fig. 12 gezeigt. Sobald ein den Vollzug des Absägens anzeigendes Signal vom Spindelstockverfahr-Servomotor M11 eingeht, gibt der Computer einen Entspannbefehl nur an den Spannzylinder 43 der vorderen Spanneinheit 40 (S155) sowie einen Befehl zur Öffnung des Druckluftventils 29 ab, um das Ausblasen von Druckluft durch die Düsen 21 zu starten (S156). Der Computer gibt dann einen Befehl an den Spindelstockverfahr-Servomotor M11 ab, den Spindelstock in die Bereitschaftsposition zurückzufahren (S157). Wenn der Computer erkennt, dass die Kreissäge in die Bereitschaftsposition zurückgefahren ist (JA bei S158), gibt er einen Befehl zum Anhalten des Kreissägeblattmotors 11 und Schließen des Druckluftventils 29 ab, um das Ausblasen von Druckluft zu beenden (S159).

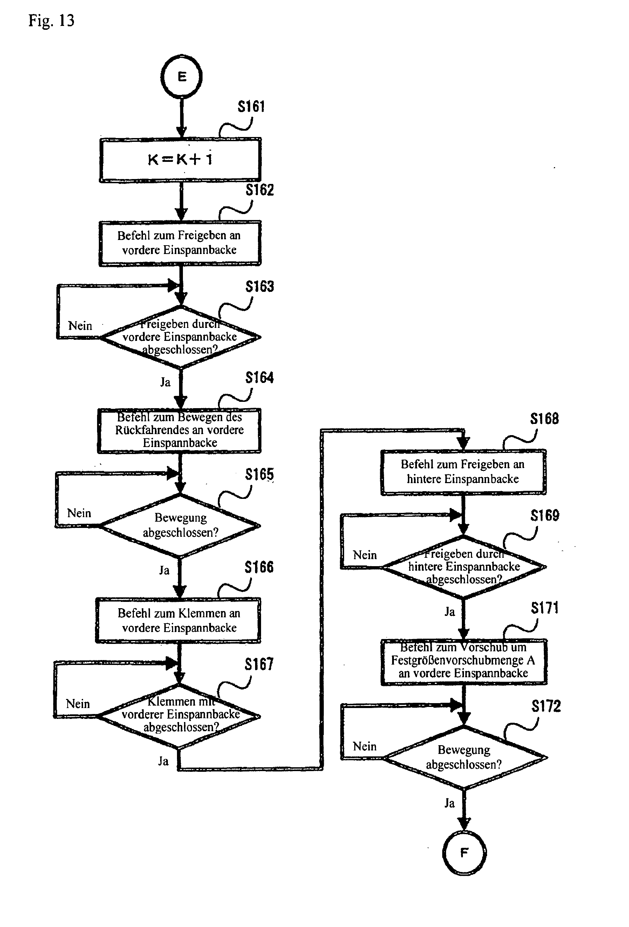

Anschließend bestimmt der Computer, ob der Zählwert K gleich N ist oder nicht (S160). Wenn der Computer feststellt, dass K<N ist (NO bei S160), vergrößert er den Zählwert K (S161), wie in Fig. 13 gezeigt wird, und gibt dann einen Befehl an den Servomotor M40 für die Vor- und Zurückbewegung der vorderen Spanneinheit 40 ab, um die vordere Spanneinheit 40 zum Rückzugsende P1 zu verfahren (S162). Sobald der Computer erkennt, dass die vordere Spanneinheit 40 an das Rückzugsende verfahren ist (JA bei S163), gibt er einen Spannbefehl an den Spannzylinder 43 der vorderen Spanneinheit 40 ab (S164). Nachdem er erkannt hat, dass die vordere Spanneinheit 40 das Spannen vollzogen hat (JA bei S165), gibt er einen Entspannbefehl an den Spannzylinder 33 der hinteren Spanneinheit 30 ab (S166). Sobald der Computer erkennt, dass die hintere Spanneinheit 30 entspannt hat (JA bei S167), gibt er einen Befehl an den Servomotor M40 für die Vor- und Zurückbewegung der vorderen Spanneinheit 40 ab, um die vordere Spanneinheit 40 um den Verfahrbetrag fester Länge A vorzufahren (S171). Sobald der Computer erkennt, dass die vordere Spanneinheit 40 ihre Vorwärtsfahrt vollendet hat (JA bei S172), kehrt der durch den Computer ausgeführte Steuerungsprozess zu den Prozessschritten bei S145 und nachfolgende zurück.

Wenn der Computer feststellt, dass K=N ist (JA bei S160), gibt er einen Entspannbefehl an jeden der beiden Spannzylinder 33 der hinteren Spanneinheit 30 und 43 der vorderen Spanneinheit 40 ab und beendet dann die Routine des Absägens auf feste Länge (S181).

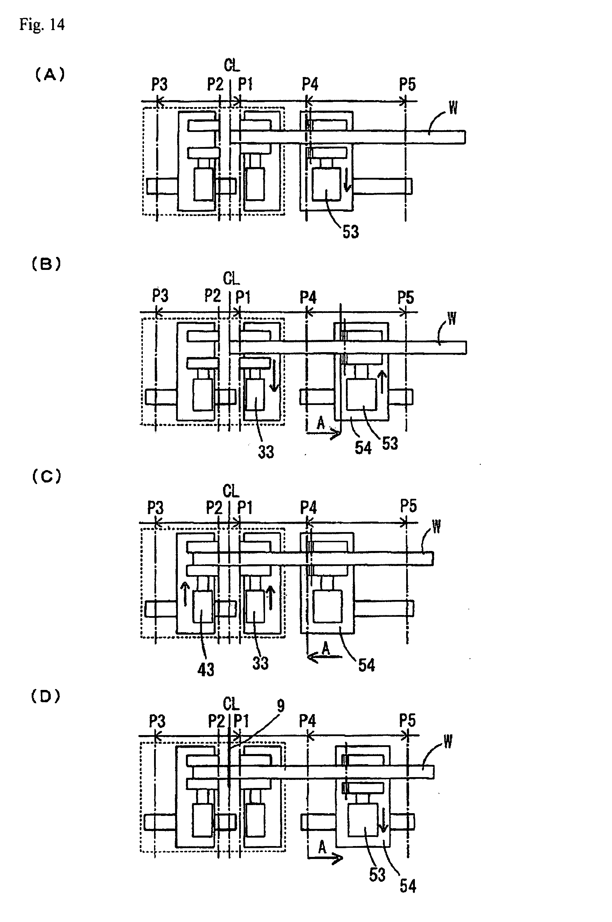

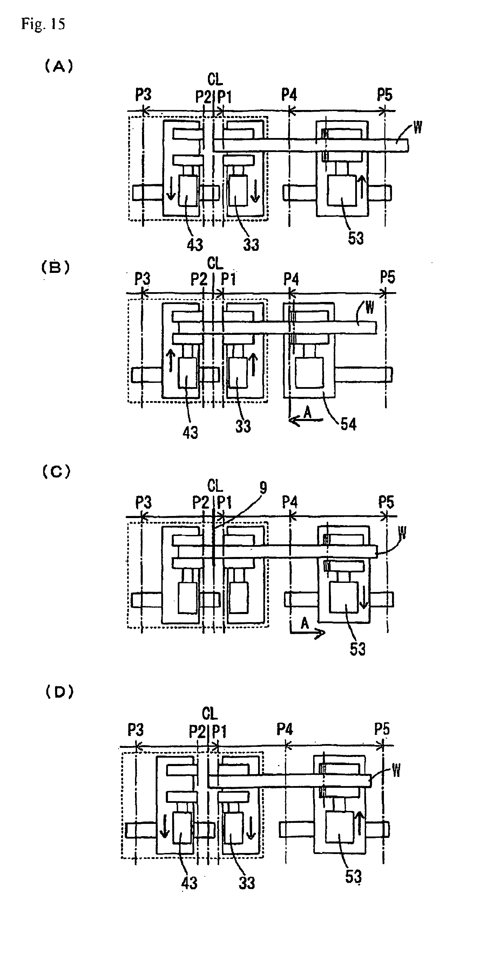

Nachdem das vordere Ende abgesägt oder an Ort und Stelle gebracht ist, wie in den Fig. 14(A) und (B) gezeigt, vollzieht die Zuführspanneinheit 15 bei dieser Ausgestaltung durch Ausführen des beschriebenen Steuerungsprozesses des Absägens auf feste Länge (S100) die Zuführung des Werkstücks W um den Zuführbetrag der festen Länge A jeweils gesteuert durch den Computer, wobei das Kreissägeblatt 9 das Werkstück sägt, wie in den Fig. 14(C)-16(A) gezeigt wird. Das geschieht, solange Werkstückerkennungssignale von den photoelektrischen Sensoren 56 empfangen werden, wenn die Zuführspanneinheit 15 zurückfährt, um eine Zufuhr um eine feste Länge in Gang zu setzen. Während dieser Zeit führen die Spannzylinder 43 und 33 der hinteren und der vorderen Spanneinheit 40 und 30 der Hauptspanneinheit 13 Spannen und Entspannen gleichzeitig aus (siehe Fig. 14(C), Fig. 15(B), Fig. 15(D), and Fig. 16(A)).

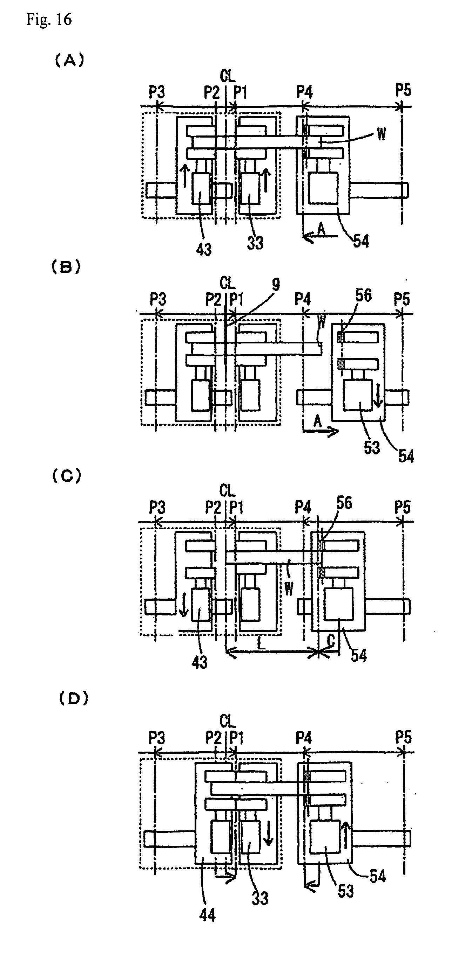

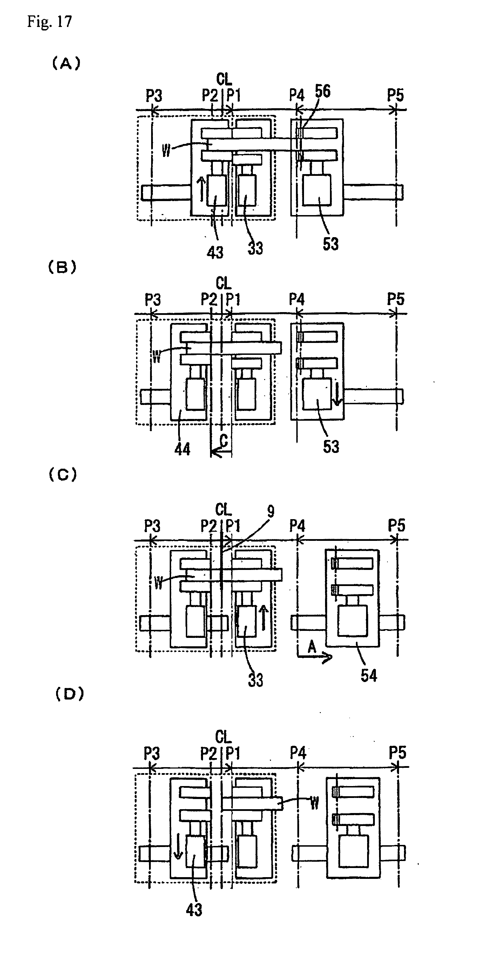

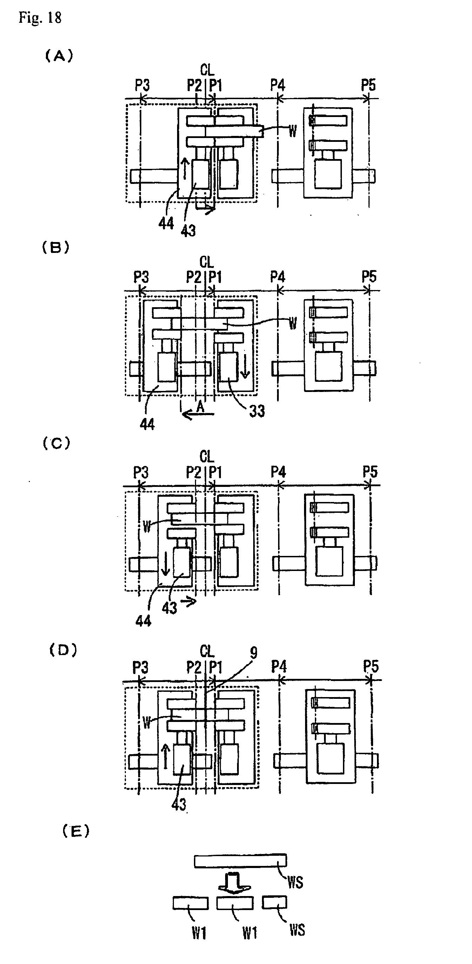

Wenn keine Werkstückerkennungssignale mehr von den photoelektrischen Sensoren 56 empfangen werden, wenn die Zuführspanneinheit 15 zurückfährt, wie in Fig. 16(B) gezeigt, wird die Zuführspanneinheit 15 mit langsamer Geschwindigkeit gesteuert durch den Computer vorgefahren, wie in Fig. 16(C) gezeigt, um die verbleibende sägbare Länge L des Werkstücks zu ermitteln. Nachdem die Zuführspanneinheit 15 die letzte Zuführoperation ausgeführt hat, wie in den Fig. 16(C) und (D) gezeigt, wird gesteuert durch den Computer die vordere Spanneinheit 30 an das hintere Ende ihres Verfahrbereichs zurückgefahren, das heißt in die Position, in der die Backen in Kontakt mit den Backen der hinteren Spanneinheit 40 gelangen, wie in den Fig. 16(D) und 17(A) gezeigt, um das Werkstück W, das durch die Zuführspanneinheit 15 nicht mehr zugeführt werden kann, zu spannen und um den Abstand C vorzuziehen. Diese Handlung vollendet die Operation des Zuführens um die feste Länge A, indem der Zuführweg um die Strecke ergänzt wird, die von der Zuführspanneinheit 15 in deren letzter Zuführoperation nicht ausgeführt werden konnte, wie in den Fig. 16(C) und (D) gezeigt wird. Danach wird, wie in Fig. 17(C) gezeigt, gesteuert durch den Computer der Sägeschnitt ausgeführt, nachdem die vordere Spanneinheit 40 in die vorgegebene Schnittposition P2 zurückgekehrt ist. Dann wird bei von der hinteren Spanneinheit 30 gespanntem und von der vorderen Spanneinheit 40 entspanntem Werkstück W die vordere Spanneinheit 40 zurückgefahren, bis die Backen der vorderen Spanneinheit 40 und die Backen der hinteren Spanneinheit 30 in Kontakt miteinander gelangen. Daraufhin spannt und zieht die vordere Spanneinheit 40 das Werkstück W um den Betrag fester Länge A (siehe Fig. 17(D)-Fig. 18(B)). Diese Handlung erzielt ein Zuführen um die feste Länge A des Werkstücks W auch dann, wenn die Zuführspanneinheit 15 das Werkstück W nicht mehr zuzuführen vermag. Die vordere Spanneinheit 40 zieht das Werkstück wiederholt vor, bis der Zählwert K gleich N geworden ist, um auf diese Weise die Anzahl der erzeugbaren Rohlinge W1 zu maximieren und die Länge des Werkstückreststücks WS zu minimieren.

Weiterhin kann die Sägeapparatur 1 von Ausgestaltung 1 den Schneidenrand des Kreissägeblatts 9 mittels Druckluft abbiegen. Dadurch kann ein wechselseitiges Aufeinandereinwirken von Werkstück W und Kreissägeblatt auch dann vermieden werden, wenn die Zuführspanneinheit 15 das Werkstück während des Zurückfahrens der Kreissäge nicht zurückzieht. Auch das erleichtert vorteilhaftenrveise die Fortsetzung des Absägens auf feste Länge unter Anwendung der vorderen Spanneinheit 40 zum Vorziehen des Werkstücks, sobald die Zuführspanneinheit 15 das Werkstück nicht mehr zuzuführen oder zurückzuziehen vermag. Es wird ferner die Zykluszeit für das kontinuierliche Absägen auf feste Länge dadurch verkürzt, dass das Zurückziehen durch die Zuführspanneinheit 15 während des Absägens auf feste Länge wegfällt. Zu beachten ist, dass der Schneidenrand mit den von der Sägeapparatur 1 produzierten Rohlingen W1 nicht in Kontakt gelangt, weil diese nach Beendigung des Absägens über eine Rutsche oder ein ähnliches Bauteil abgeführt werden.

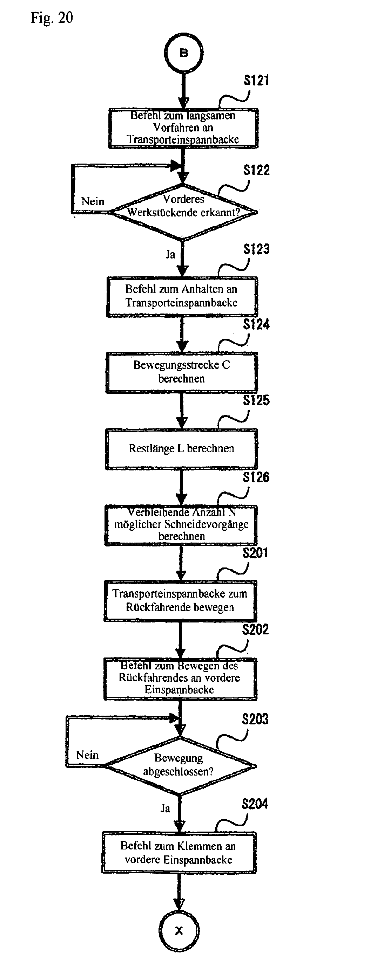

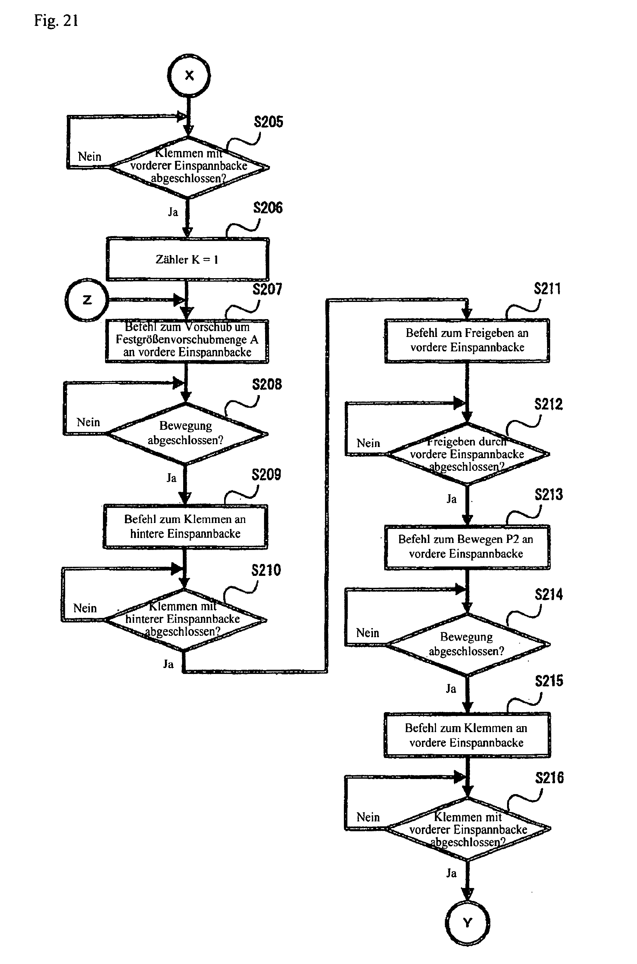

Ausgestaltung 2 ist mit Ausgestaltung 1 hinsichtlich des Aufbaus der Apparatur identisch. Die Ausgestaltung 2 unterscheidet sich von Ausgestaltung 1 insofern, als in der Routine für die Steuerung des Absägens auf feste Länge der Computer, sobald er von den photoelektrischen Sensoren 56 keine Werkstückerkennungssignale mehr erhält (NO bei S101), die Bearbeitung wie in Fig. 20 und den folgenden Figuren anstelle wie bei S131 und folgende ausführt. Insbesondere gibt der Computer einen Befehl "langsames Anfahren" an den Servomotor M15 der Zuführspanneinheit 15 ab (S121) sowie einen Anhaltebefehl an den Servomotor M15, sobald die photoelektrischen Sensoren 56 das hintere Ende des Werkstücks erkennen (S122 und S123), wonach der Computer die Verfahrlänge C berechnet (S124), um die verbleibende Länge L=B+A-C zu berechnen (S125). Nach der Berechnung der verbleibenden Anzahl N der möglichen Sägeoperationen durch Division der verbleibenden Länge L minus der für die Ausführung des Spannens durch die hintere Spanneinheit 30 erforderlichen Länge X, (L-X), durch den Betrag fester Länge A (S126) gibt der Computer einen Befehl zum Verfahren der Zuführspanneinheit 15 an das Rückzugsende P5 ab (S201), wie in Fig. 20 gezeigt. Als nächstes wird die vordere Spanneinheit 40, die zu diesem Zeitpunkt entspannt ist, an das Rückzugsende P1 verfahren (S202). Sobald der Computer den Vollzug des Verfahrens an das Rückzugsende erkannt hat (JA bei S203), gibt er einen Befehl an den Spannzylinder der vorderen Spanneinheit 40, um die vordere Spanneinheit 40 zur Ausführung des Spannens zu veranlassen (S204). Anschließend setzt der Computer, wie in Fig. 21 gezeigt, sobald er den Vollzug des Spannens erkannt hat (JA bei S205), den Zählwert K auf 1 (S206) und gibt einen Befehl an den Servomotor M40 der Vor- und Rückbewegung ab, die vordere Spanneinheit 40 um den Betrag fester Länge A vorzufahren (S207). Sobald der Computer den Vollzug des Vorfahrens erkannt hat (JA bei S208), gibt er einen Spannbefehl an den Spannzylinder 33 der hinteren Spanneinheit 30 ab (S209). Wenn er den Vollzug des Spannens durch die hintere Spanneinheit 30 erkannt hat (JA bei S210), gibt er einen Entspannbefehl an die vordere Spanneinheit 40 ab (S211). Sobald der Computer erkennt, dass die vordere Spanneinheit 40 das Entspannen vollzogen hat (JA bei S212), gibt er einen Befehl an den Servomotor M40 der Vor- und Rückbewegung ab, die vordere Spanneinheit 40 in die vorgegebene Sägeposition P2 zu verfahren (S213). Sobald der Computer den Vollzug des Verfahrens erkannt hat (JA bei S214), gibt er einen Spannbefehl an den Spannzylinder 43 der vorderen Spanneinheit 40 ab (S215).

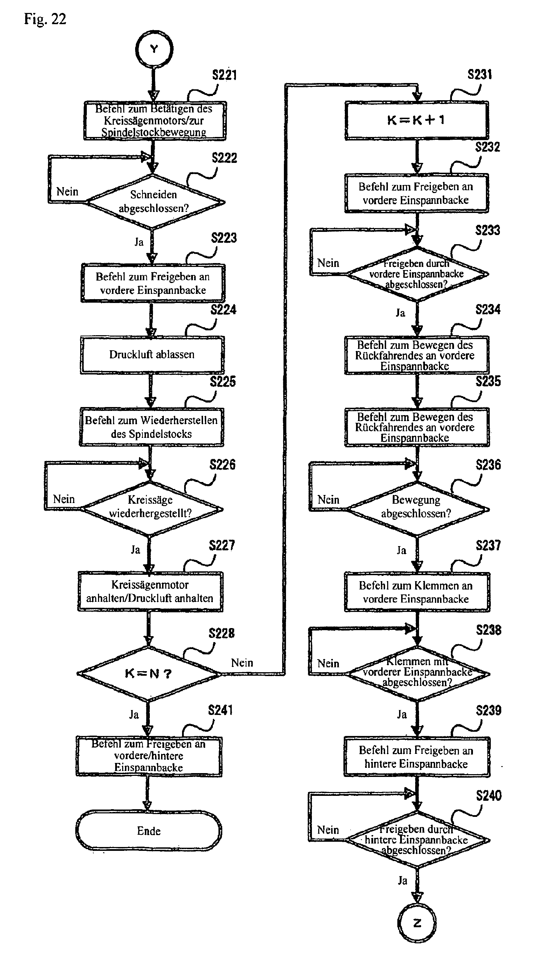

Bei Erkennung des Vollzugs des Spannens durch die vordere Spanneinheit 40 (JA bei S216) gibt der Computer einen Antriebsbefehl an den Kreissägeblattmotor 11 und einen Befehl an den Servomotor M11 für den Vorschub des Spindelstocks ab, das Absägen auszuführen (S221), wie in Fig. 22 gezeigt. Sobald der Computer ein Signal über den Vollzug des Absägens vom Spindelstockverfahr-Servomotor M11 erhält (JA bei S222), gibt er einen Entspannbefehl nur an den Spannzylinder 33 der vorderen Spanneinheit 30 ab (S223) sowie einen Befehl zur Öffnung des Druckluftventils 29, um das Ausblasen von Druckluft durch die Düsen 21 zu starten (S224). Der Computer gibt dann einen Befehl an den Spindelstockverfahr-Servomotor M11 ab, den Spindelstock in die Bereitschaftsposition zurückzufahren (S225). Wenn der Computer erkennt, dass die Kreissäge in die Bereitschaftsposition zurückgefahren ist (JA bei S226), gibt er Befehle zum Anhalten des Kreissägeblattmotors 11 und Schließen des Druckluftventils 29 ab, um das Ausblasen von Druckluft zu beenden (S227).

Danach bestimmt der Computer, ob der Zählwert K gleich N ist oder nicht (S228). Wenn der Computer feststellt, dass K<N ist (NO bei S228), vergrößert er den Zählwert K (S231) und gibt dann einen Befehl an den Servomotor M40 für die Vor- und Zurückbewegung der vorderen Spanneinheit 40 ab, um die vordere Spanneinheit 40 zum Rückzugsende P1 zu verfahren (S232). Sobald der Computer erkennt, dass die vordere Spanneinheit 40 an das Rückzugsende verfahren ist (JA bei S233), gibt er einen Spannbefehl an den Spannzylinder 43 der vorderen Spanneinheit 40 ab (S234). Nachdem er erkannt hat, dass die vordere Spanneinheit 40 das Spannen vollzogen hat (JA bei S235), gibt er einen Entspannbefehl an den Spannzylinder 33 der hinteren Spanneinheit 30 ab (S236). Sobald der Computer erkennt, dass die hintere Spanneinheit 30 entspannt hat (JA bei S237), kehrt der durch den Computer ausgeführte Steuerungsprozess zu den Prozessschritten bei S207 und nachfolgende zurück.

Wenn der Computer K=N ermittelt (JA at S228), gibt er an jeden der Spannzylinder 33 der hinteren Spanneinheit 30 und Spannzylinder 43 der vorderen Spanneinheit 40 einen Entspannbefehl ab, um die Routine des Absägens auf feste Länge zu beenden (S241).

Gemäß Ausgestaltung 2 und durch Ausführung des beschriebenen Steuerungsprozess des Absägens auf feste Länge zieht die vordere Spanneinheit 20, sobald die Zuführspanneinheit 15 kein Absägen auf feste Länge mehr realisieren kann, das Werkstück W um jeweils den Betrag fester Länge A für wiederholtes Absägen vor, um die Länge des Werkstückreststücks WS zu minimieren. Darüberhinaus ist wie bei Ausgestaltung 1 die Sägeapparatur 1 von Ausgestaltung 2 in der Lage, den Schneidenrand durch Anblasen mit Luft abzubiegen.

Mit der obigen Beschreibung von Ausgestaltungen der vorliegenden Erfindung ist diese Erfindung in keiner Weise auf diese Ausgestaltungen beschränkt, sondern kann auf verschiedene Weisen modifiziert werden, ohne dass der Geltungsbereich der Erfindung verlassen wird.

Die Erfindung ist für Apparaturen zur kontinuierlichen spanenden Bearbeitung von Werkstücken anwendbar.

### LISTE DER BEZUGSZEICHEN

- 1: Sägeapparatur
- 2: Druckluftquelle
- 3: automatische Sägemaschine mit Kreissägeblatt
- 5: Rollenförderer
- 7: Speicher
- 9: Kreissägeblatt
- 11: Kreissägeblattmotor
- 13: Hauptspanneinheit
- 15: Zuführspanneinheit
- 21: Druckluftdüse
- 23: Blattabddeckung
- 25: Luftdurchlass
- 27: Schlauch
- 29: Druckluftventil
- 30: hintere Spanneinheit
- 31: feststehende Spannbacke
- 32: bewegliche Spannbacke
- 33: Hydrozylinder
- 40: vordere Spanneinheit
- 41: feststehende Spannbacke
- 42: bewegliche Spannbacke
- 43: Hydrozylinder
- 44: Grundplatte
- 45: Führungsstange
- 51: feststehende Spannbacke
- 52: bewegliche Spannbacke
- 53: Hydrozylinder

## Patentansprüche

1. Eine Sägemaschine mit Kreissägeblatt, umfassend: eine Spindelstockvorschubeinheit für den Vorschub eines Spindelstocks zwischen einer Bereitschaftsposition und einer Schnittposition, wobei der Spindelstock einen Kreissägeblattmotor für den rotativen Antrieb eines Kreissägeblatts aufweist; eine Zuführspanneinheit für das Zuführen des Werkstücks durch Vorschieben in die Schnittposition; eine Hauptspanneinheit zum Festhalten des Werkstücks an vorgegebenen Positionen hinter und vor der Schnittposition sowie über die Schnittposition hinweg; sowie eine Steuereinrichtung für das Absägen auf feste Länge, die die Antriebe des Kreissägeblattmotors, der Spindelstockvorschubeinheit, der Zuführspanneinheit und der Hauptspanneinheit zur Ausführung des Absägens auf feste Länge steuert, wobei die Kreissägemaschine ferner durch die folgenden Merkmale gekennzeichnet ist:
(1) dass die Hauptspanneinheit eine hintere und eine vordere Spanneinheit umfasst; die hintere Spanneinheit in Vorwärts- und Rückwärtsrichtung in einer vorgegebenen Position hinter der Schnittposition fixiert ist und die vordere Spanneinheit als ihre beim Sägeschnitt voreingestellte Position eine vorgegebene Position vor und über der Schnittposition relativ zur hinteren Spanneinheit aufweist, wobei die vordere Spanneinheit in Vorwärts- und Rückwärtsrichtung in einem Bereich zwischen einer Position in Vorwärtsrichtung von ihrer voreingestellten Position und einer hintersten Position beweglich angeordnet ist, in der die hinteren Enden der Spannbacken der vorderen Spanneinheit in Kontakt mit den vorderen Enden der Spannbacken der hinteren Spanneinheit sind, wobei die vordere und die hintere Spanneinheit gesonderte Spannzylinder aufweisen, die unabhängig voneinander gesteuert werden können, um das Ein- und Ausspannen unabhängig voneinander ausführen zu können;
(2) Werkstückendflächensensoren für die Erkennung eines hinteren Werkstückendes; und
(3) dass die Steuereinrichtung für das Absägen auf feste Länge so konfiguriert ist, dass sie den Steuerungsprozess derart ausführt, dass die folgenden Mittel implementiert werden:
(3A) ein Feste-Länge-Absäge-Mittel zum Sägen des Werkstückmaterials auf eine feste Länge durch wiederholtes Ausführen des folgenden Steuerungsprozesses: Veranlassen der Zuführspanneinheit, das Werkstück in einer Bereitschaftsposition zu spannen und um einen festen Zuführbetrag von der Bereitschaftsposition aus bei ungespannt bleibender vorderer und ungespannt bleibender hinterer Spanneinheit; nach Ausführen des Zuführens Veranlassen der vorderen und der hinteren Spanneinheit, das Werkstück jeweils an der entsprechenden vorgegebenen Position der Spanneinheit vor und hinter einer Schneidlinie zu spannen; Betreiben des Kreissägeblattmotors und der Spindelstockvorschubeinheit zum Sägen des Werkstücks; nach Ausführen des Sägens des Werkstücks Veranlassen der Zuführspanneinheit, das Werkstück zu entspannen und nach dem Zurückfahren in ihre Bereitschaftsposition das Werkstück zu spannen; Veranlassen der vorderen und der hinteren Spanneinheit, das Werkstück zu entspannen; nach dem Veranlassen der Zuführspanneinheit, aus der Bereitschaftsposition um den Betrag der festen Länge mit durch die Zuführspanneinheit gespanntem Werkstück vorzufahren, Veranlassen der vorderen und der hinteren Spanneinheit, das Werkstück jeweils an der entsprechenden vorgegebenen Position der Spanneinheit vor und hinter der Schneidlinie zu spannen; und Betreiben des Kreissägeblattmotors und der Spindelstockvorschubeinheit zum Sägen des Werkstücks;
(3B) ein Bestimmungsmittel zur Berechnung einer verbleibenden Länge des Werkstücks, das dem Sägen auf Abschnitte fester Länge unterworfen ist, auf der Grundlage von Erkennungssignalen der Werkstückendflächensensoren und Feststellung, ob die verbleibende Länge noch oder nicht mehr dafür ausreicht, dass die Zuführspanneinheit das Werkstück um den Betrag der festen Länge zuführen kann;
(3C) ein Mittel zum Vorziehen des Werkstücks, wenn das Bestimmungsmittel feststellt, dass die verbleibende Länge des Werkstücks nicht mehr dafür ausreicht, dass die Zuführspanneinheit das Werkstück um den Betrag der festen Länge zuführen kann, das die vordere Spanneinheit veranlasst, bei ungespanntem Werkstück in die hinterste Position zurückzufahren, und die vordere Spanneinheit anschließend veranlasst, das Werkstück allein zu spannen und um einen vorbestimmten Vorziehbetrag zuzuführen, um das Werkstück, das um die feste Länge nicht mehr vorgeschoben werden kann, in Vorwärtsrichtung um die Länge gleich dem Zuführbetrag für die feste Länge von der Schneidlinie aus zu positionieren; und
(3D) ein Werkstückreststücksägemittel, das, nachdem das Mittel zum Vorziehen des Werkstücks betätigt worden ist, um die vordere Spanneinheit zum Vorziehen des Werkstücks zu veranlassen, die hintere Spanneinheit veranlasst, das Werkstück zu spannen, und die vordere Spanneinheit, das Werkstück zu entspannen und zurückzufahren; das ferner die vordere Spanneinheit veranlasst, in der vorgegebenen Position in Vorwärtsrichtung von der Schneidlinie anzuhalten und dann das Werkstück wieder zu spannen; und das den Kreissägeblattmotor und die Spindelstockvorschubeinheit zum Sägen des Werkstücks betreibt, das durch die vordere und die hintere Spanneinheit in den vorgegebenen Positionen vor und hinter der Schnittposition gespannt ist, so dass das Werkstückreststück gesägt wird, das durch die Zuführspanneinheit um den Betrag der festen Länge nicht mehr vorgeschoben werden kann.

2. Die Sägemaschine mit Kreissägeblatt gemäß Anspruch 1 **gekennzeichnet dadurch, dass** die Steuereinrichtung für das Absägen auf feste Länge ferner das folgende Merkmal aufweist:
(3E) dass das Werkstückvorziehmittel derart konfiguriert ist, dass es die vordere Spanneinheit aus der hintersten Position um den Zuführbetrag der festen Länge zusammen mit dem durch die vordere Spanneinheit gespannten Werkstück vorzieht.

3. Die Sägemaschine mit Kreissägeblatt gemäß Anspruch 1 oder 2 **gekennzeichnet dadurch, dass** die Steuereinrichtung für das Absägen auf feste Länge ferner das folgende Merkmal aufweist:
(3F) dass das Werkstückvorziehmittel derart konfiguriert ist, dass es: die Zuführspanneinheit veranlasst, das Werkstück nach der Vorwärtsbewegung aus der Bereitschaftsposition zu spannen und von dieser Spannposition zu einem vorwärts gerichteten Ende zu bewegen; die aktuell am vorwärts gerichteten Ende befindliche Zuführspanneinheit veranlasst, das Werkstück an die Hauptspanneinheit zu übergeben, während die Zuführspanneinheit das Werkstück dadurch spannt, dass sie die hintere Spanneinheit der Hauptspanneinheit zum Spannen des Werkstücks veranlasst; die vordere Spanneinheit veranlasst, das Werkstück zu entspannen und in die hinterste Position zurückzufahren; und anschließend die vordere Spanneinheit veranlasst, das Werkstück in der hintersten Position allein zu spannen und das Werkstück um die Länge gleich dem Zuführbetrag für die feste Länge minus der voranstehend erwähnten Bewegung der Zuführspanneinheit zuzuführen, so dass das Vorziehen des Werkstücks ausgeführt wird.

4. Die Sägemaschine mit Kreissägeblatt gemäß jedem der Ansprüche 1 bis 3 **gekennzeichnet dadurch, dass** sie ferner die folgenden Merkmale aufweist:
(4) dass Luftdüsen nahe dem Schneidenrand des auf dem Kreissägeblattmotor montierten Kreissägeblatts vorgesehen sind, wobei die Luftdüsen dazu dienen, Druckluft in Werkstückzuführungsrichtung zu blasen; und
(3G) dass die Steuereinrichtung für das Absägen auf feste Länge ferner so konfiguriert ist, dass sie den Steuerungsprozess derart ausführt, dass sie ein Sägeblattrückzug-Steuermittel zur Verfügung stellt, das die Zuführspanneinheit veranlasst, das Werkstück zu spannen und um einen kleinen Betrag zurückzuziehen, wenn die Spindelstockvorschubeinheit den Kreissägeblattmotor aus der Schnittposition in die Bereitschaftsposition zurückfährt, bis das Bestimmungsmittel feststellt, dass die verbleibende Länge des Werkstücks nicht mehr dafür ausreicht, dass die Zuführspanneinheit das Werkstück um den Betrag der festen Länge zuführen kann, und nach der Feststellung des Bestimmungsmittels, dass die Zuführspanneinheit das Werkstück nicht mehr um den Betrag der festen Länge zuführen kann, das Sägeblattrückzug-Steuermittel den Kreissägeblattmotor veranlasst, den Rückzug nach dem Veranlassen des Blasens von Druckluft aus den Druckluftdüsen zu beginnen, wenn die Spindelstockvorschubeinheit den Kreissägeblattmotor aus der Schnittposition in die Bereitschaftsposition zurückfährt, wobei das Sägeblattrückzugsteuermittel weiterhin veranlasst, dass Druckluft aus den Druckluftdüsen mindestens so lange geblasen wird, bis der Schneidenrand des Kreissägeblatts die Schnittfläche des Werkstücks in Richtung Bereitschaftsposition verlassen hat.
